# EUROPEAN PATENT SPECIFICATION

(11) **EP 4 604 265 B1**
(45) Date of publication and mention of the grant of the patent: **29.07.2026**
(21) Application number: 25153451.7
(22) Date of filing: 23.01.2025
(51) Int. Cl.: H01M 10/54

(54) **BATTERY CELL RECYCLING DEVICE AND BATTERY CELL TAPE PROCESSING METHOD**
BATTERIEZELLENRECYCLINGVORRICHTUNG UND BATTERIEZELLENBANDVERARBEITUNGSVERFAHREN
DISPOSITIF DE RECYCLAGE D'ÉLÉMENTS DE BATTERIE ET PROCÉDÉ DE TRAITEMENT DE BANDE D'ÉLÉMENTS DE BATTERIE

(30) Priority: 04.02.2024 CN 202410161404
(43) Date of publication of application: 20.08.2025
(73) Proprietor: Hithium Tech HK Limited, Hong Kong (HK)
(72) Inventor: CHEN, Xuanfeng, Xiamen, 361100 (CN); CHEN, Jiazhu, Xiamen, 361100 (CN); WU, Xiaoqiang, Xiamen, 361100 (CN); FAN, Yunlong, Xiamen, 361100 (CN)
(74) Representative: RGTH

(56) References cited:
- CN-A- 114 744 321
- CN-A- 114 940 296
- CN-B- 109 672 003

## Description

### TECHNICAL FIELD

The present invention relates to the field of battery technology, and in particular to a battery cell recycling device and a battery cell tape processing method.

### BACKGROUND

With the widespread use of secondary batteries, a large number of defective or bad products will be produced during the production process, which need to be recycled and disassembled. In the process of recycling defective or bad secondary batteries, the secondary battery cells are generally disassembled and recycled manually. CN114940296A discloses a hot cutting mechanism for disassembling the battery core of a scrapped power lithium battery.

### SUMMARY

The present invention discloses a battery cell recycling device and a battery cell tape processing method, which can effectively improve the processing efficiency of the tape attached to the battery cell and save time and labor.

In order to achieve the above objects, according to a first aspect, there is provided a battery cell recycling device for processing tapes attached to a battery cell, comprising:
a workbench, configured to carry the battery cell with the tapes to be processed;
an end surface tape processing module, comprising a first cutter assembly, wherein the first cutter assembly comprises a first cutter and a first driving member, the first driving member is transmission connected to the first cutter , the first driving member is configured to drive the first cutter to move toward or away from end surfaces of the battery cell to cut end surface tapes located at two end surfaces of the battery cell; and
a termination tape processing module arranged downstream of the end surface tape processing module, comprising a separator lifting assembly and a second cutter assembly, wherein the separator lifting assembly is configured to lift a large surface separator on a large surface of the battery cell and attached with a termination tape to separate the large surface separator from the large surface of the battery cell, the second cutter assembly comprises a second cutter and a second driving member, the second driving member is transmission connected to the second cutter and is configured to drive the second cutter to move along a first direction to cut off the large surface separator, the first direction is an arrangement direction of the two end surfaces of the battery cell.

In the embodiment, the battery cell with the tape to be processed is placed on a workbench, and the first driving member is connected to the first cutter for driving the first cutter to move toward or away from the end surface of the battery cell to cut the end surface tapes located at the two end surfaces of the battery cell (the top surface and the bottom surface of the battery cell), so that the battery cell can be freed from the restraint and fixation of the top surface tape and the bottom surface tape. Then, the large surface separator located on the large surface of the battery cell and attached with the termination tape can be lifted by the separator lifting assembly to separate the large surface separator from the large surface of the battery cell. Then, the second cutter is driven to move along the first direction by the second driving member to cut off the large surface separator, so that the battery cell can be freed from the restraint and fixation of the termination tape. In the process of cutting off the large surface separator by the second cutter, since the large surface separator is separated from the large surface of the battery cell, it can effectively prevent cutting of other separators of the battery cell, the positive electrode sheet and the negative electrode sheet of the battery cell, effectively improve the processing effect of the tape of the battery cell, and improve the subsequent recovery rate of the positive electrode sheet, negative electrode sheet and separator of the battery cell. In addition, compared with the method of manually processing the tape attached to the battery cell, it can effectively improve the processing efficiency of the tape attached to the battery cell, and save time and effort.

In a possible implementation of the first aspect, the separator lifting assembly comprises a separator lifting member and a separator lifting driving member. The separator lifting member is located on an upper side of the workbench. The separator lifting driving member is transmission connected to the separator lifting member for driving the separator lifting member to move toward or away from the workbench, so that the separator lifting member is capable of lifting the large surface separator.

Thus, the separator lifting member can be driven by the separator lifting driving member to move to the large surface separator in the direction close to the worktable and lift the large surface separator. After the large surface separator is cut off, the separator lifting member can be driven by the separator lifting driving member to move in the direction away from the worktable and release the lifting of the large surface separator. It is easy to operate quickly and conveniently.

In a possible implementation of the first aspect, there are multiple separator lifting members. The multiple separator lifting members are arranged at intervals along the first direction, and two separator lifting members located at two ends of the multiple separator lifting members are respectively arranged close to the two end surfaces of the battery cell.

Thus, a gap between the two sides of the large surface separator closing to the two end surfaces of the large surface separator and the large surface of the battery cell can be made large enough to allow the second cutter to be easily accessible between the large surface separator and the large surface of the battery cell.

In a possible implementation of the first aspect, the separator lifting member further comprises a support. The support is fixedly connected to the workbench. The separator lifting driving member is disposed on the support. The multiple separator lifting members are arranged at intervals on the support along the first direction.

Thus, the separator lifting assembly can be securely mounted on the workbench, while at the same time making the structure of the separator lifting assembly simpler.

In a possible implementation of the first aspect, the separator lifting member is provided with a vacuum adsorption hole at one end toward the workbench. An adsorption end of the vacuum adsorption hole is arranged toward the bearing surface of the workbench, and a suction end of the vacuum adsorption hole is connected to a vacuum pumping device.

Thus, the vacuum adsorption hole can be vacuum adsorbed on the large surface separator by the vacuum pumping device evacuating the vacuum adsorption hole to realize the lifting of the large surface separator, which is convenient and simple to operate.

In a possible implementation of the first aspect, the second cutter is capable of extending between the large surface separator and the large surface of the battery cell along the first direction, and a blade of the second cutter faces toward the large surface separator to cut off the large surface separator when the second cutter moves along the first direction.

Thus, when the large surface separator is cut off by the second cutter, it is less likely to cut the large surface of the battery cell, which effectively prevents the second cutter from cutting other separators, positive electrode sheet and negative electrode sheet of the battery cell. At the same time, the second cutter can make the large surface separator relatively tight while cutting, so that the second cutter can cut off the large surface separator more fully.

In a possible implementation of the first aspect, the second cutter comprises a blade body and a blade tip. The blade body extends along the first direction, and the blade tip is arranged on at least one of the two ends of the blade body opposite to each other along the first direction.

Thus, the second cutter can have a certain length along the first direction, so that during the cutting process, the second cutter can play a better stretching role on the large surface separator. Thus, the large surface separator can be stretched tighter, so that the second cutter can produce a better cutting effect.

In a possible implementation of the first aspect, the thickness of the blade tip along the direction perpendicular to the bearing surface of the workbench gradually increases from the end of the blade tip away from the blade body to the end close to the blade body.

Thus, the thickness of the blade tip of the second cutter can be thinner, so that the second cutter can have less resistance during the cutting process. Thus, the cutting of the second cutter can be smoother, and the cutting efficiency of the large surface separator is improved, thereby improving the processing efficiency of the tape of the battery cell.

In a possible implementation of the first aspect, the width of the blade tip along the direction perpendicular to the first direction and parallel to the bearing surface of the workbench gradually widens from the end of the blade tip away from the blade body to the end close to the blade body.

Thus, the width of the blade tip of the second cutter can be narrower, so that the second cutter has less resistance during the cutting process. Thus, the cutting of the second cutter can be smoother, and the cutting efficiency of the large surface separator is improved, thereby improving the processing efficiency of the tape of the battery cell.

In a possible implementation of the first aspect, the termination tape processing module further comprises a blowing member. The blowing port of the blowing member is arranged on the upper side of the bearing surface of the workbench. The blowing member is configured to blow the cut large surface separator away from the large surface of the battery cell.

Thus, the blowing member can be configured to blow toward the cut end of the large surface separator to blow the cut large surface separator away from the large surface of the battery cell, so that the cut large surface separator can be picked up more easily when the battery cell is subsequently unwound and disassembled, thereby improving the efficiency of unwinding and disassembling the battery cell.

In a possible implementation of the first aspect, the termination tape processing module further comprises a first clamp assembly. The first clamp assembly is configured to clamp or release the battery cell carried on the workbench.

Thus, when the large surface separator of the battery cell is lifted by the separator lifting assembly, and the large surface separator 207 is cut off by the second cutter, the battery cell can be stably carried on the workbench, thereby effectively preventing the positive electrode sheet or negative electrode sheet of the battery cell from being cut due to the movement of the battery cell when the second cutter is cutting, and improving the cutting effect of the second cutter.

In a possible implementation of the first aspect, the first clamp assembly comprises a first clamping driving member, a second clamping driving member, a first clamp and a second clamp. The first clamp and the second clamp are arranged oppositely along the first direction, and are configured to clamp the two end surfaces of the battery cell. The first clamping driving member is transmission connected to the first clamp , and is configured to drive the first clamp to move along the first direction. The second clamping driving member is transmission connected to the second clamp , and is configured to drive the second clamp to move along the first direction.

Thus, the first clamp and the second clamp can clamp the battery cells of different sizes. At the same time, when one of the first clamping driving member and the second clamping driving member has a problem, the corresponding clamp can be driven to move by the other one to clamp the battery cell, which effectively improves the practicality of the first clamp assembly.

In a possible implementation of the first aspect, the termination tape processing module further comprises a first limiting assembly. The first limiting assembly is configured to limit the position of the battery cell on the workbench in a direction perpendicular to the first direction and parallel to the bearing surface of the workbench. The first clamp, the second clamp and the first limiting assembly are enclosed to form a space for fixing the battery cell.

Thus, when placing the battery cell on the workbench, the battery cell is pushed in a direction perpendicular to the first direction and parallel to the bearing surface of the workbench until the battery cell abuts against the first limiting assembly, and the battery cell can be placed in place on the workbench in a direction perpendicular to the first direction and parallel to the bearing surface of the workbench, and the operation is simple and convenient.

In a possible implementation of the first aspect, the termination tape processing module further comprises a first controller. The first controller is arranged on the workbench and is electrically connected to the separator lifting assembly and the second cutter assembly, and is configured to control the lifting of the large surface separator by the separator lifting assembly and the start and stop of the second driving member.

Thus, the termination tape processing module has a high degree of automation, which saves time and effort, and effectively improves the cutting efficiency of the large surface separator, thereby improving the processing efficiency of the tape of the battery cell.

In a possible implementation of the first aspect, the first cutter is located on the upper side of the workbench, and the cutting track of the first cutter has an angle with the plane where the end surface of the battery cell is located.

Thus, the angle between the blade of the first cutter and the large surface of the battery cell can be between 0° and 90°, and the cutting resistance of the first cutter is effectively reduced, thereby improving the cutting efficiency of the first cutter.

In a possible implementation of the first aspect, the end surface tape processing module further comprises a second clamp assembly. The second clamp assembly comprises a third clamping driving member and a third clamp. The third clamping driving member is transmission connected to the third clamp for clamping or releasing the battery cell carried on the workbench.

Thus, the battery cell can be stably supported on the workbench, thereby effectively preventing the positive electrode sheet or negative electrode sheet of the battery cell from being cut by the first cutter due to the movement of the battery cell, and improving the cutting effect of the first cutter and the subsequent recovery rate of the positive electrode sheet and negative electrode sheet of the battery cell.

In a possible implementation of the first aspect, the end surface tape processing module further comprises a pressing assembly. The pressing assembly is arranged on the upper side of the workbench. The pressing assembly comprises a pressing driving member and a pressing member. The pressing member is configured to abut against the large surface of the battery cell. The pressing driving member is transmission connected to the pressing member, and is configured to drive the pressing member to move toward or away from the bearing surface of the workbench in the vertical direction.

Thus, the battery cell can be pressed tightly in the vertical direction, thereby improving the cutting effect of the first cutter.

In a possible implementation of the first aspect, the end surface tape processing module further comprises a second limiting assembly. The second limiting assembly is arranged on the workbench and is configured to limit the position of the battery cell on the workbench along the first direction.

Thus, when the battery cell is placed on the workbench, the battery cell is pushed in a direction perpendicular to the first direction and parallel to the bearing surface of the workbench until the battery cell abuts against the second limiting assembly, so that the battery cell can be placed in place on the workbench in a direction perpendicular to the first direction and parallel to the bearing surface of the workbench, and the operation is simple and convenient.

In a possible implementation of the first aspect, the second limiting assembly comprises a limiting driving member and a second limiting member. The second limiting member is arranged on the bearing surface of the workbench. The limiting driving member is transmission connected to the second limiting member, and is configured to drive the second limiting member to move along the first direction.

Thus, the end surface of the battery cell can be located on the cutting track of the first cutter when the second limiting member limits the battery cells of different sizes, and the cutting steps for the end surface tape of the battery cell are simplified, thereby saving time and effort, and improving the cutting efficiency for the end surface tape of the battery cell.

In a possible implementation of the first aspect, the end surface tape processing module further comprises a second controller. The second controller is disposed on the workbench and electrically connected to the first driving member, and is configured to control the start and stop of the first driving member.

Thus, the end surface tape processing module has a high degree of automation, which saves time and effort, and effectively improves the cutting efficiency of the end surface tape, thereby improving the processing efficiency of the tape of the battery cell.

In a possible implementation of first aspect, the workbench comprises a first workbench and a second workbench. The second workbench is arranged downstream of the first workbench. The first workbench is configured to carry the battery cell with the end surface tape to be processed. The second workbench is configured to carry the battery cell with the termination tape to be processed.

The battery cell recycling device further comprises a transfer module. The transfer module is movably arranged between the first workbench and the second workbench.

Thus, the end surface tape of the battery cell can be cut on the first workbench, and the large surface separator with the termination tape attached can be cut off on the second workbench, so that the tapes attached to the battery cell can be processed in steps, further improving the processing efficiency of the tape on the battery cell.

According to a second aspect, there is provided a method for processing a battery cell tape, performed by the cell recycling device according to any one of the first aspect, the tape comprises end surface tapes and a termination tape, and the method for processing the battery cell tape comprises:
cutting, by the first cutter, the end surface tapes located at two end surfaces of the battery cell;
lifting, by the separator lifting assembly, a large surface separator located at a large surface of the battery cell and attached with the termination tape; and
cutting off, by the second cutter, the large surface separator in the first direction.

Thus, when processing the tape adhered to the battery cell, the end surface tapes on the two end surfaces of the battery cell can be cut by the first cutter first to release the restraint and fixation of the end surface tapes on the two end surfaces of the battery cell. Then, the large surface separator of the battery cell with the end surface tapes cut can be lifted by the separator lifting assembly, so that a gap is formed between the large surface separator and the large surface of the battery cell, and an opening can be formed between the two ends of the large surface separator close to the end surfaces and the large surface of the battery cell. Then, the large surface separator is cut off by moving the second cutter along the first direction, so that the battery cell can be freed from the restraint and fixation of the termination tape. In the process of cutting off the large surface separator by the second cutter, the large surface separator is separated from the large surface of the battery cell, which can effectively prevent the other separators of the battery cell, the positive electrode sheet and the negative electrode sheet of the battery cell from being cut, effectively improve the processing effect of the tape of the battery cell, and improve the subsequent recovery rate of the positive electrode sheet, the negative electrode sheet and the separator of the battery cell. In addition, compared with the method of manually processing the tape attached to the battery cell, the processing efficiency of the tape attached to the battery cell can be effectively improved, and time and labor are saved.

In a possible implementation of the second aspect, cutting off, by the second cutter, the large surface separator in the first direction comprises:

inserting the second cutter into a gap between the large surface separator and the large surface of the battery cell, and moving the second cutter along the first direction to cut off the large surface separator.

Thus, when the large surface separator is cut off by the second cutter, the second cutter is less likely to cut the large surface of the battery cell, which effectively prevents the second cutter from cutting other separators, the positive electrode sheet and the negative electrode sheet of the battery cell, and enables the second cutter to cut the large surface separator more fully.

In a possible implementation of the second aspect, the battery cell has a first end surface and a second end surface that are arranged opposite to each other. The end surface tapes comprise a first end surface tape located at the first end surface and a second end surface tape located at the second end surface. The first cutter is located on an upper side of the bearing surface of the workbench, and cutting, by the first cutter, the end surface tapes located at the two end surfaces of the battery cell comprises: when a number of the battery cell is one or the number of the battery cells is multiple, and the multiple battery cells are stacked, placing the battery cell on the workbench with the first end surface and the second end surface arranged opposite to each other along the first direction, and placing the first end surface tape of the battery cell on a cutting track of the first cutter, and controlling the first cutter to tilt downward to cut the first end surface tape;
rotating the battery cell by 180° on the workbench around a rotation axis perpendicular to the bearing surface of the workbench, and placing the second end surface tape of the battery cell on the cutting track of the first cutter, and controlling the first cutter to tilt downward to cut the second end surface tape; or,
when the number of the battery cells is two, and the two battery cells are connected side by side through top covers of the battery cells, laying the two battery cells and the top covers flat on the workbench along the first direction, and placing the first end surface tape of one of the battery cells on the cutting track of the first cutter, and controlling the first cutter to tilt downward to cut the first end surface tape of one of the battery cells, and then, moving the two battery cells along the first direction, and placing the second end surface tape of one of the battery cells on the cutting track of the first cutter, and controlling the first cutter to tilt downward to cut the second end surface tape of one of the battery cells; and
rotating the other battery cell by rotated 180° on the workbench around the rotation axis perpendicular to the bearing surface of the workbench, and placing the first end surface tape of the other battery cell on the cutting track of the first cutter, and controlling the first cutter to tilt downward to cut the first end surface tape of the other cell, and then, moving the other battery cell along the first direction, and placing the second end surface tape of the other battery cell on the cutting track of the first cutter, and controlling the first cutter to tilt downward to cut the second end surface tape of the other battery cell.

Thus, regardless of whether it is a single battery cell, a plurality of stacked battery cells, or two battery cells connected side by side through the top cover of the battery cell, the end surface tape processing module in the above-mentioned battery cell recycling device 10 can process the end surface tapes located at the two end surfaces of the battery cell, so that the end surface tape processing module can process the end surface tapes of different forms of battery cells, effectively improving the applicability of the battery cell recycling device.

Compared with the prior art, the beneficial effects of the present disclosure are as follows:
In the present disclosure, the battery cell with the tape to be processed is placed on a workbench, and the first driving member is connected to the first cutter for driving the first cutter to move toward or away from the end surface of the battery cell to cut the end surface tapes located at the two end surfaces of the battery cell (the top surface and the bottom surface of the battery cell), so that the battery cell can be freed from the restraint and fixation of the top surface tape and the bottom surface tape. Then, the large surface separator located on the large surface of the battery cell and attached with the termination tape can be lifted by the separator lifting assembly to separate the large surface separator from the large surface of the battery cell. Then, the second cutter is driven to move along the first direction by the second driving member to cut off the large surface separator, so that the battery cell can be freed from the restraint and fixation of the termination tape. In the process of cutting off the large surface separator by the second cutter, since the large surface separator is separated from the large surface of the battery cell, it can effectively prevent cutting of other separators of the battery cell, the positive electrode sheet and the negative electrode sheet of the battery cell, effectively improve the processing effect of the tape of the battery cell, and improve the subsequent recovery rate of the positive electrode sheet, negative electrode sheet and separator of the battery cell. In addition, compared with the method of manually processing the tape attached to the battery cell, it can effectively improve the processing efficiency of the tape attached to the battery cell, and save time and effort.

### BRIEF DESCRIPTION OF THE DRAWINGS

In order to more clearly illustrate the technical solutions in the embodiments of the present invention, the drawings required for use in the embodiments will be briefly introduced below. Obviously, the drawings described below are only some embodiments of the present disclosure. For those skilled in the art, other drawings can be obtained based on these drawings without creative work.
FIG. 1 is a stereoscopic view of a battery cell provided in an embodiment of the present invention;
FIG. 2 is a stereoscopic view of a battery cell recycling device provided in an embodiment of the present invention;
FIG. 3 is a combined stereoscopic view of a first workbench and an end surface tape processing module provided in an embodiment of the present disclosure;
FIG. 4 is a stereoscopic view of a combination of a first workbench and an end surface tape processing module provided in an embodiment of the present disclosure after being flipped at a certain angle;
FIG. 5 is a combined stereoscopic view of a second workbench and a termination tape processing module provided in an embodiment of the present invention;
FIG. 6 is an enlarged view of a position A in FIG. 5;
FIG. 7 is a stereoscopic view of a separator lifting assembly provided in an embodiment of the present invention;
FIG. 8 is a stereoscopic diagram of a second cutter assembly provided in an embodiment of the present invention;
FIG. 9 is a stereoscopic diagram of a second cutter provided in an embodiment of the present invention;
FIG. 10 is a process flow chart of a battery cell tape provided in an embodiment of the present invention;
FIG. 11 is another process flow chart of a battery cell tape provided in an embodiment of the present invention;
FIG. 12 is a process flow chart of an end surface tape of a battery cell provided in an embodiment of the present invention;
FIG. 13 is another process flow chart of an end surface tape of a battery cell provided in an embodiment of the present invention.

### Description of reference numerals:

1a-first workbench; 1b-second workbench; 2-first cutter assembly; 21-first cutter; 3-separator lifting assembly; 31-separator lifting member; 311-vacuum adsorption hole; 32-separator lifting driving member; 33-support; 4-second cutter assembly; 41-second cutter; 411-blade body; 412-blade tip; 42-second driving member; 5-blowing member; 6a-first clamp assembly; 6b-second clamp assembly; 7a-first limiting assembly; 7b-second limiting assembly; 8a-first controller; 8b-second controller; 9-pressing assembly;
10-battery cell recovery device; 101-workbench; 102-end surface tape processing module; 103-termination tape processing module; 20-battery cell; 201-top surface tape; 202-bottom surface tape; 203-termination tape; 204-top surface; 205-bottom surface; 206-large surface; 207-large surface separator.

### DETAILED DESCRIPTION

The following will combine the drawings in the embodiments of the present invention to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by those skilled in the art without creative work are within the scope of protection of the present disclosure.

In the present invention, the terms "mounting", "setting", "provided with", "connecting", and "connected" should be understood in a broad sense. For example, it can be a fixed connection, a detachable connection, or an integral structure; it can be a mechanical connection, or an electrical connection; it can be directly connected, or indirectly connected through an intermediate medium, or it can be an internal connection between two devices, elements or components. For those skilled in the art, the specific meanings of the above terms in the present disclosure can be understood according to the specific circumstances.

In addition, the terms "first", "second", etc. are mainly used to distinguish different devices, elements or components (the specific types and structures may be the same or different), and are not used to indicate or imply the relative importance and quantity of the indicated devices, elements or components. Unless otherwise specified, "multiple" means two or more.

When disassembling the secondary battery cells manually, it is necessary to first remove the battery cell from the secondary battery shell, then remove the top cover connected to the battery cell, remove the top tape, bottom tape and termination tape attached to the top, bottom and winding tail of the battery cell, and finally unwind and disassemble the battery cell, which is time-consuming, labor-intensive and inefficient.

The present invention discloses a battery cell recycling device and a battery cell tape processing method, which can effectively improve the processing efficiency of the tape attached to the battery cell, and save time and effort.

The technical solution of the present invention will be further described in combination with specific embodiments and drawings.

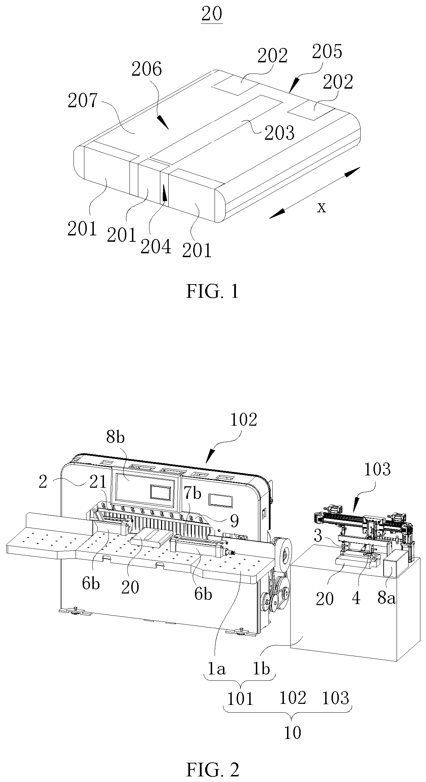

The battery cell can be formed by a stacking process or a winding process. When the battery cell is formed by the winding process, as shown in FIG. 1, layered positive electrode sheet, the separator and the negative electrode sheet are wound together. Finally, the insulating tapes are attached to the top surface 204, the bottom surface 205, the winding termination point and the lead-out part of the tab of the battery cell 20. That is, the top surface tape 201, the bottom surface tape 202 and the termination tape 203 will be attached to the battery cell 20. Attaching insulating tapes to the top surface 204, bottom surface 205 and winding termination of the battery cell 20 can fix the battery cell 20, facilitate the subsequent assembly of the battery cell 20 into the shell and improve the safety performance of the battery cell 20, etc. Attaching insulating tape to the lead-out part of the tab is mainly to prevent the burrs on the electrode sheet and the tab from piercing the separator and short circuiting when used improperly, which can improve the safety performance of the battery cell 20. Therefore, when recycling the battery cell 20 in the defective or bad secondary battery, it is necessary to process the tape on the battery cell 20 first, and then the wound battery cell 20 can be unwound and disassembled to recycle the positive electrode sheet, negative electrode sheet and separator. In order to save time and effort, the tape on the battery cell 20 is efficiently processed.

The present embodiment provides a battery cell recycling device 10 for processing the tape attached to the battery cell 20. As shown in FIG. 2 to FIG. 6, the battery cell recycling device 10 comprises a workbench 101, an end surface tape processing module 102, and a termination tape processing module 103. The workbench 101 is configured to carry the battery cell 20 with the tape to be processed. The end surface tape processing module 102 comprises a first cutter assembly 2. The first cutter assembly 2 comprises a first cutter 21 and a first driving member (not shown in the figure). The first driving member is transmission connected to the first cutter 21 and is configured to drive the first cutter 21 to move toward or away from the end surface of the battery cell 20 to cut the end surface tapes located at the two end surfaces of the battery cell 20. The termination tape processing module 103 is arranged downstream of the end surface tape processing module 102. The termination tape processing module 103 comprises a separator lifting assembly 3 and a second cutter assembly 4. The separator lifting assembly 3 is configured to lift the large surface separator 207 located on the large surface 206 of the battery cell 20 and attached with the termination tape 203, so as to separate the large surface separator 207 from the large surface 206 of the battery cell 20. The second cutter assembly 4 comprises a second cutter 41 and a second driving member 42. The second driving member 42 is transmission connected to the second cutter 41, and is configured to drive the second cutter 41 to move along the first direction (x direction as shown in FIG. 1) to cut off the large surface separator 207. The first direction is the arrangement direction of the two end surfaces of the battery cell 20.

In this embodiment, the battery cell 20 with the tape to be processed is carried on the workbench 101. The first driving member is transmission connected to the first cutter 21 to drive the first cutter 21 to move toward or away from the end surface of the battery cell 20 to cut the end surface tapes located at the two end surfaces of the battery cell 20 (the top surface 204 and the bottom surface 205 of the battery cell 20), so that the battery cell 20 can be freed from the top surface tape 201 and the bottom surface tape 202. Then, the large surface separator 207 located at the large surface 206 of the battery cell 20 and attached with the termination tape 203 can be lifted by the separator lifting assembly 3, so as to separate the large surface separator 207 from the large surface 206 of the battery cell 20. Then, the second cutter 41 is driven by the second driving member 42 to move along the first direction to cut off the large surface separator 207, so that the battery cell 20 can be freed from the termination tape 203. In the process of cutting off the large surface separator 207 by the second cutter 41, since the large surface separator 207 is separated from the large surface 206 of the battery cell 20, it can effectively prevent the other separators of the battery cell 20, the positive electrode sheet and the negative electrode sheet of the battery cell 20 from being cut, effectively improve the processing effect of the tape of the battery cell 20, and improve the subsequent recovery rate of the positive electrode sheet, negative electrode sheet and separator of the battery cell 20. In addition, compared with the method of manually processing the tape attached to the battery cell 20, it can effectively improve the processing efficiency of the tape attached to the battery cell 20, and save time and labor.

The first driving member can be any one of a cylinder, an electric cylinder or a linear motor, etc., which is not limited here. The implementation method of the second driving member 42 can be roughly the same as the implementation method of the first driving member, which will not be repeated here.

It should be explained that the above-mentioned cutting off the large surface separator 207 refers to cutting off the termination tape 203 along the first direction by the second cutter 41 so that the large surface separator 207 can be separated from other parts of the battery cell 20, or cutting off the large surface separator 207 attached with the termination tape 203 along the first direction by the second cutter 41 so that the large surface separator 207 can be separated from other parts of the battery cell 20.

It should also be explained that the above-mentioned end surface tape refers to the top surface tape 201 attached to the top surface 204 of the battery cell 20 and the bottom surface tape 202 attached to the bottom surface 205 of the battery cell 20.

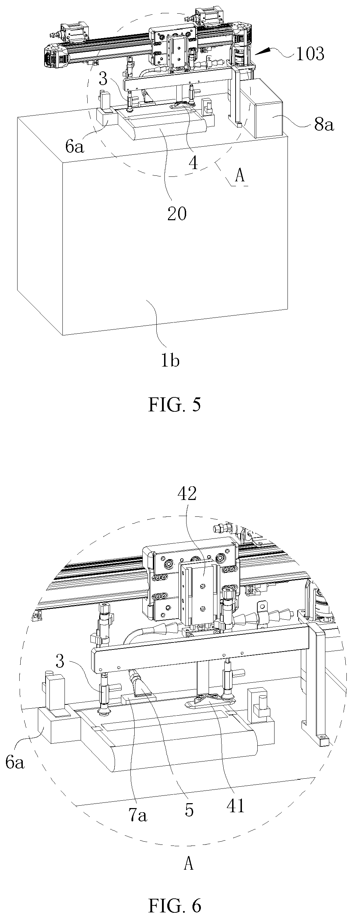

In some embodiments, as shown in FIG. 5 to FIG. 7, the separator lifting assembly 3 comprises a separator lifting member 31 and a separator lifting driving member 32. The separator lifting member 31 is located on the upper side of the workbench 101. The separator lifting driving member 32 is transmission connected to the separator lifting member 31 and is configured to drive the separator lifting member 31 to move toward or away from the workbench 101, so that the separator lifting member 31 can lift the large surface separator 207.

Therefore, when the battery cell 20 with the end surface tape cut is subjected to the large surface separator 207 cutting, the separator lifting member 31 can be driven by the separator lifting driving member 32 to move toward the direction close to the workbench 101 to the large surface separator 207, and the large surface separator 207 can be lifted. After the large surface separator 207 is cut off, the separator lifting member 31 can be driven by the separator lifting driving member 32 to move away from the workbench 101. The lifting of the large surface separator 207 is released, and the operation is convenient and quick.

The separator lifting driving member 32 can be any one of a cylinder, an electric cylinder, or a combination of a motor and a screw nut, etc., which is not limited here.

In addition, the number of separator lifting members 31 can be multiple. The multiple separator lifting members 31 are arranged at intervals along the first direction, and the two separator lifting members 31 located at the two ends of the multiple separator lifting members 31 are respectively arranged close to the two end surfaces of the battery cell 20.

Thus, the gap between the two sides of the large surface separator 207 close to the two end surfaces of the battery cell 20 and the large surface 206 of the battery cell 20 can be made to be large enough to allow the second cutter 41 to be easily accessible when the second cutter 41 is extended from the two end surfaces of the battery cell 20 between the large surface separator 207 and the large surface 206 of the battery cell 20.

The number of separator lifting members 31 can be two, three or more, which is not limited here.

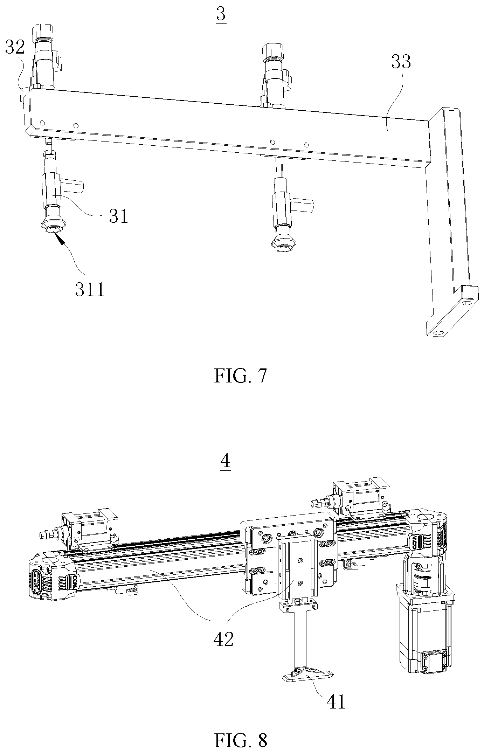

In some embodiments, as shown in FIG. 7, the separator lifting assembly 3 further comprises a support 33. The support 33 is fixedly connected to the workbench 101. The separator lifting driving member 32 is arranged on the support 33, and a plurality of separator lifting members 31 are spaced apart on the support 33 along the first direction.

Thus, the separator lifting assembly 3 can be relatively stably arranged on the workbench 101, and the structure of the separator lifting assembly 3 can also be relatively simple.

The plurality of separator lifting members 31 can be movably arranged on the support 33, and can be fixed by bolts, so as to reasonably adjust the positions of the plurality of separator lifting members 31 along the first direction according to the size of the battery cell 20 along the first direction, so that the large surface separator 207 can be relatively fully separated from the large surface 206 of the battery cell 20.

The above-mentioned support 33 can comprise a vertical plate fixedly connected to the workbench 101 and a connecting arm extending along the first direction, so as to reduce the space occupied by the support 33, while also enabling the length of the connecting arm to be set longer to facilitate the setting of a plurality of separator lifting members 31, and the separator lifting driving member 32 can be fixed on the connecting arm.

In addition, the number of separator lifting driving members 32 can be multiple. The multiple separator lifting driving members 32 are arranged in one-to-one correspondence with the multiple separator lifting members 31, so that each separator lifting member 31 can move independently, so that when a certain separator lifting driving member 32 has a problem, the other separator lifting members 31 can still continue to lift the large surface separator 207.

Of course, the number of separator lifting driving members 32 can also be one. The one separator lifting driving member 32 is respectively connected to multiple separator lifting members 31, so that the multiple separator lifting members 31 can move toward or away from the workbench 101 at the same time, so that the movement control of the multiple separator lifting members 31 has a lower difficulty.

The above-mentioned separator lifting member 31 can lift the large surface separator 207 in a variety of ways. In a possible implementation, an adhesive surface can be provided on one end of the separator lifting member 31 facing the bearing surface of the workbench 101, so that when the separator lifting member 31 needs to lift the large surface separator 207, it can be adhered to the large surface separator 207 through the adhesive surface, and the structure is simple and easy to implement.

In another possible implementation, as shown in FIG. 7, a vacuum adsorption hole 311 is provided at one end of the separator lifting member 31 facing the workbench 101. An adsorption end of the vacuum adsorption hole 311 is provided toward the bearing surface of the workbench 101, and the suction end of the vacuum adsorption hole 311 is connected to a vacuum pumping device.

Thus, the vacuum adsorption hole 311 can be vacuum adsorbed on the large surface separator 207 by the vacuum pumping device evacuating the vacuum adsorption hole 311 to realize the lifting of the large surface separator 207, which is convenient and simple to operate.

The number of vacuum adsorption holes 311 provided at one end of the separator lifting member 31 facing the workbench 101 can be one, two or more, which is not limited here.

As mentioned above, when the second cutter 41 cuts off the large surface separator 207, the second cutter 41 can cut the outer surface of the large surface separator 207, or the second cutter 41 can extend between the large surface separator 207 and the large surface 206 of the battery cell 20 for cutting, which is not limited here. The following is a more detailed description of the example of the second cutter 41 extending between the large surface separator 207 and the large surface 206 of the battery cell 20 for cutting.

In some embodiments, the second cutter 41 can extend between the large surface separator 207 and the large surface 206 of the battery cell 20 along the first direction, and the blade of the second cutter 41 faces the large surface separator 207 to cut off the large surface separator 207 when the second cutter 41 moves along the first direction.

Thus, when the large surface separator 207 is cut off by the second cutter 41, it is less likely to cut the large surface 206 of the battery cell 20, which effectively prevents the second cutter 41 from cutting other separators, positive electrode sheet and negative electrode sheet of the battery cell 20. At the same time, the second cutter 41 can make the large surface separator 207 relatively tight while cutting, so that the second cutter 41 can cut off the large surface separator 207 more fully.

For example, after the end surface tapes of the two end surfaces of the battery cell 20 are cut, the separator lifting driving member 32 can drive the separator lifting member 31 to lift the large surface separator 207, so that a larger gap is formed between the large surface separator 207 and the large surface 206 of the battery cell 20. Then, the second driving member 42 can drive the second cutter 41 to extend from one of the two end surfaces of the battery cell 20 between the large surface separator 207 and the large surface 206 of the battery cell 20, and drive the second cutter 41 to move along the first direction to cut off the large surface separator 207.

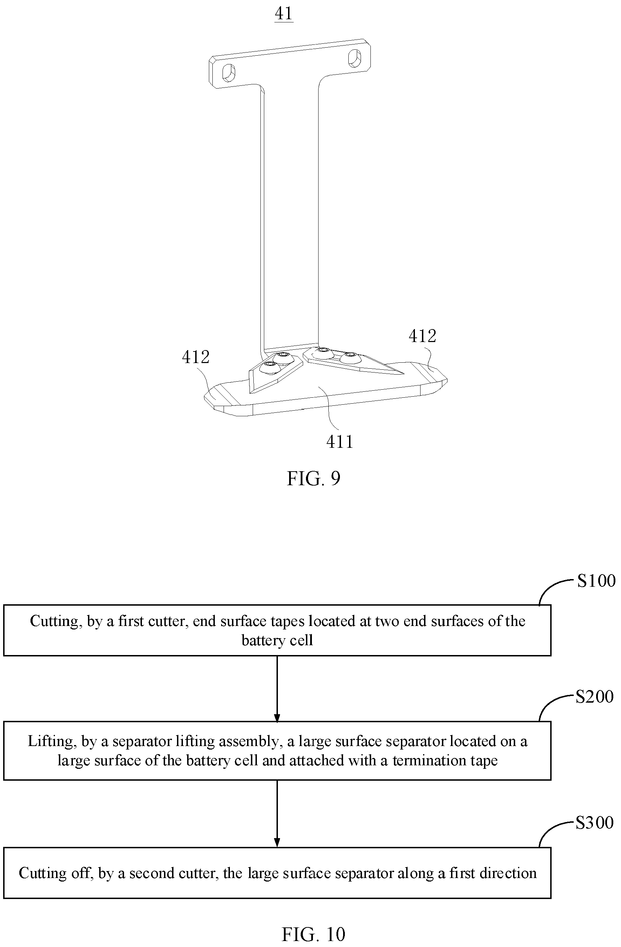

In some embodiments, as shown in FIG. 8 and FIG. 9, the second cutter 41 comprises a blade body 411 and a blade tip 412. The blade body 411 extends along the first direction, and the blade tip 412 is arranged on at least one of the two ends of the blade body 411 opposite to each other along the first direction.

Thus, the second cutter 41 can have a certain length along the first direction, so that during the cutting process, the second cutter 41 can play a better stretching role on the large surface separator 207. Thus, the large surface separator 207 can be stretched tighter, so that the second cutter 41 can produce a better cutting effect.

The blade of the second cutter 41 can extend from the blade tip 412 to the blade body 411, so that during the cutting process, after the large surface separator 207 is cut by the blade tip 412, the blade body 411 can continue to cut the large surface separator 207, such as cutting the fine fibers left after the cutting by the blade tip 412, so that the second cutter 41 can cut the large surface separator 207 more fully.

In addition, the shape of the blade body 411 can be any one of a rectangular structure, an elliptical structure, a trapezoidal structure, etc., which is not limited here.

In some embodiments, as shown in FIG. 8 and FIG. 9, the thickness of the blade tip 412 along the direction perpendicular to the bearing surface of the workbench 101 gradually increases from the end of the blade tip 412 away from the blade body 411 to the end close to the blade body 411.

Thus, the thickness of the blade tip 412 of the second cutter 41 can be thinner, so that the second cutter 41 can have less resistance during the cutting process. Thus, the cutting of the second cutter 41 can be smoother, and the cutting efficiency of the large surface separator 207 is improved, thereby improving the processing efficiency of the tape of the battery cell 20.

The thickness of the blade body 411 along the direction perpendicular to the bearing surface of the workbench 101 can be relatively uniform, so that the structure of the blade body 411 is relatively simple, and the difficulty of making the second cutter 41 is reduced.

In some embodiments, as shown in FIG. 9, the width of the blade tip 412 along the direction perpendicular to the first direction and parallel to the bearing surface of the workbench 101 gradually widens from the end of the blade tip 412 away from the blade body 411 to the end close to the blade body 411.

Thus, the width of the blade tip 412 of the second cutter 41 can be narrower, so that the second cutter 41 has less resistance during the cutting process. Thus, the cutting of the second cutter 41 can be smoother, and the cutting efficiency of the large surface separator 207 is improved, thereby improving the processing efficiency of the tape of the battery cell 20.

The width of the blade body 411 along the direction perpendicular to the first direction and parallel to the bearing surface of the workbench 101 can be relatively uniform, so that the structure of the blade body 411 is simpler, and the difficulty of making the second cutter 41 is further reduced.

The thickness and width of the end of the blade tip 412 away from the blade body 411 can be the thinnest and narrowest part of the blade tip 412 and the blade body 411, so that there can be less resistance in the process of the second blade 41 cutting the large surface separator 207. Thus, the cutting of the second blade 41 can be smoother, and the cutting efficiency of the large surface separator 207 is improved, thereby improving the processing efficiency of the tape of the battery cell 20.

In some embodiments, as shown in FIG. 6, the termination tape processing module 103 further comprises a blowing member 5. The blowing port of the blowing member 5 is arranged on the upper side of the bearing surface of the workbench 101. The blowing member 5 is configured to blow the cut large surface separator 207 away from the large surface 206 of the battery cell 20.

Thus, after the large surface separator 207 is cut off, the blowing member 5 can be configured to blow toward the cut end of the large surface separator 207 to blow the cut large surface separator 207 away from the large surface 206 of the battery cell 20, so that the cut large surface separator 207 can be picked up more easily when the battery cell 20 is subsequently unwound and disassembled, thereby improving the efficiency of unwinding and disassembling the battery cell 20.

The blowing port of the blowing member 5 is arranged on the upper side of the bearing surface of the workbench 101. The outlet angle of the blowing port can be greater than 0° and less than 90°, such as 10°, 20°, 45°, etc., so that the gas blown out from the blowing port can blow the cut large surface separator 207 away from the large surface 206 of the battery cell 20 and can be unfolded.

In addition, the air inlet of the blowing member 5 is connected to the air storage device, and the air inlet is connected to the blowing port, so that when the air storage device is turned on, the gas can flow from the air storage device through the air inlet and blow out from the blowing port to blow the cut large surface separator 207 away from the large surface 206 of the battery cell 20. When blowing is not required, the air storage device can be turned off, and the operation is simple and convenient.

In other embodiments, as shown in FIG. 6, the termination tape processing module 103 further comprises a first clamp assembly 6a. The first clamp assembly 6a is configured to clamp or release the battery cell 20 carried on the workbench 101.

Thus, when the large surface separator 207 of the battery cell 20 is lifted by the separator lifting assembly 3, and the large surface separator 207 is cut off by the second cutter 41, the battery cell 20 can be stably carried on the workbench 101, thereby effectively preventing the positive electrode sheet or negative electrode sheet of the battery cell 20 from being cut due to the movement of the battery cell 20 when the second cutter 41 is cutting, and improving the cutting effect of the second cutter 41.

The first clamp assembly 6a has multiple implementations. In one possible implementation, the first clamp assembly 6a may comprise a first clamping driving member, a first clamp and a second clamp. The first clamping driving member is arranged on the workbench 101. The first clamp and the second clamp are arranged oppositely along the first direction. The first clamping driving member is connected to the first clamp or the second clamp, and is configured to drive the first clamp and the second clamp to clamp or release the two end surfaces of the battery cell 20 opposite to each other along the first direction. The structure is simple and easy to implement.

In another possible implementation, the first clamp assembly 6a comprises a first clamping driving member, a second clamping driving member, a first clamp and a second clamp. The first clamp and the second clamp are arranged oppositely along the first direction. The first clamping driving member is transmission connected to the first clamp to drive the first clamp to move along the first direction. The second clamping driving member is transmission connected to the second clamp to drive the second clamp to move along the first direction.

It should be explained that the first clamp and the second clamp are arranged opposite to each other along the first direction, which does not mean that the first clamp and the second clamp are located on the same straight line along the first direction, but only means that the first clamp is arranged corresponding to one of the two end surfaces of the battery cell 20, and the second clamp is arranged corresponding to the other end surface of the two end surfaces of the battery cell 20.

Thus, the first clamp can be driven to move along the first direction by the first clamping driving member, and the second clamp can be driven to move along the first direction by the second clamping driving member, so that the first clamp and the second clamp can clamp the two end surfaces of the battery cell 20 or release the clamping of the two end surfaces of the battery cell 20. Thus, the first clamp and the second clamp can clamp the battery cells 20 of different sizes. At the same time, when one of the first clamping driving member and the second clamping driving member has a problem, the corresponding clamp can be driven to move by the other one to clamp the battery cell 20, which effectively improves the practicality of the first clamp assembly 6a.

The first clamping driving member can be any one of a cylinder, a linear motor, a motor, a screw nut, etc., which is not limited here. The second clamping driving member may have a substantially similar structure to the first clamping driving member, which will not be described in detail here.

In addition, the first clamp may be any one of a clamping block, a clamping plate, a clamping support 33, etc., which is not limited here. The implementation of the second clamp may be substantially the same as the implementation of the second clamp, so that the first clamp and the second clamp have good interchangeability, which facilitates the disassembly and assembly of the first clamp and the second clamp.

In some embodiments, as shown in FIG. 6, the termination tape processing module 103 further comprises a first limiting assembly 7a. The first limiting assembly 7a is configured to limit the position of the battery cell 20 on the workbench 101 in a direction perpendicular to the first direction and parallel to the bearing surface of the workbench 101. The first clamp, the second clamp and the first limiting assembly 7a are enclosed to form a space for fixing the battery cell 20.

Thus, when placing the battery cell 20 on the workbench 101, the battery cell 20 is pushed in a direction perpendicular to the first direction and parallel to the bearing surface of the workbench 101 until the battery cell 20 abuts against the first limiting assembly 7a, and the battery cell 20 can be placed in place on the workbench 101 in a direction perpendicular to the first direction and parallel to the bearing surface of the workbench 101, and the operation is simple and convenient.

The first limiting assembly 7a may comprise a first limiting member. The first limiting member may comprise any one of a limiting block, a limiting plate, a limiting support 33, etc., which is not limited here.

In some embodiments, as shown in FIG. 5, the termination tape processing module 103 further comprises a first controller 8a. The first controller 8a is arranged on the workbench 101 and is electrically connected to the separator lifting assembly 3 and the second cutter assembly 4, and is configured to control the lifting of the large surface separator 207 by the separator lifting assembly and the start and stop of the second driving member 42.

Therefore, by setting relevant parameters and programs on the first controller 8a, after the end surface tape of the battery cell 20 is cut, the separator lifting assembly 3 is controlled to lift the large surface separator 207, and the second driving member 42 is controlled to drive the second cutter 41 to cut off the large surface separator 207, which has a high degree of automation, saves time and effort, and effectively improves the cutting efficiency of the large surface separator 207, thereby improving the processing efficiency of the tape of the battery cell 20.

For example, after the battery cell 20 with the end surface tape cut is fixed by the first clamp assembly 6a, the cutting of the large surface separator 207 can be started on the first controller 8a. Then, the separator lifting assembly 3 is started. For example, the separator lifting driving member 32 drives the separator lifting member 31 to move downward, and adsorbs the large surface separator 207 through the vacuum adsorption hole 311, and the separator lifting driving member 32 then drives the separator lifting member 31 to move upward to lift the large surface separator 207. Then, the second driving member 42 is started to drive the second cutter 41 to cut off the large surface separator 207. For example, when the second driving member 42 comprises a horizontal moving driving member and a vertical moving driving member, the horizontal moving driving member can be connected to the vertical moving driving member, and the vertical moving driving member is connected to the second cutter 41, so that when the large surface separator 207 needs to be cut off, the second cutter 41 is driven by the horizontal moving driving member to move horizontally to the top of the end surface of the battery cell 20, and then the second cutter 41 is driven downward by the vertical moving driving member, and then the second cutter 41 is driven by the horizontal moving driving member to move horizontally to extend between the large surface separator 207 and the large surface 206 of the battery cell 20, and continue to move horizontally to cut off the large surface separator 207.

In other embodiments, the first cutter 21 is located on the upper side of the workbench 101, and the cutting track of the first cutter 21 has an angle with the plane where the end surface of the battery cell 20 is located.

Thus, the angle between the blade of the first cutter 21 and the large surface 206 of the battery cell 20 can be between 0° and 90°. Compared with the blade of the first cutter 21 being perpendicular to the large surface 206 of the battery cell 20 when cutting the end surface tape, the cutting resistance of the first cutter 21 is effectively reduced, and the cutting efficiency of the first cutter 21 is improved.

The cutting track of the first cutter 21 can be tilted from the battery cell 20 to the direction away from the battery cell 20 to prevent the first cutter 21 from cutting the positive electrode sheet and the negative electrode sheet of the battery cell 20 during the cutting process, thereby improving the subsequent recovery rate of the positive electrode sheet and the negative electrode sheet of the battery cell 20.

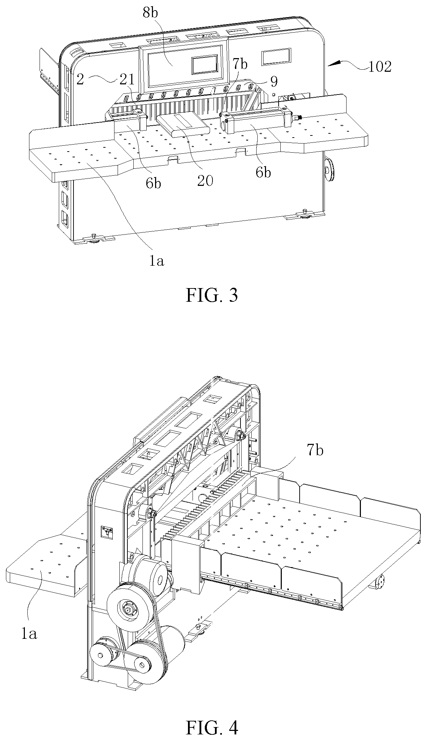

In some embodiments, as shown in FIG. 3, the end surface tape processing module 102 further comprises a second clamp assembly 6b. The second clamp assembly 6b comprises a third clamping driving member and a third clamp. The third clamping driving member is transmission connected to the third clamp for clamping or releasing the battery cell 20 carried on the workbench 101.

Thus, when the end surface tape of the battery cell 20 is cut by the first cutter 21, the battery cell 20 can be stably supported on the workbench 101, thereby effectively preventing the positive electrode sheet or negative electrode sheet of the battery cell 20 from being cut by the first cutter 21 due to the movement of the battery cell 20, and improving the cutting effect of the first cutter 21 and the subsequent recovery rate of the positive electrode sheet and negative electrode sheet of the battery cell 20.

The third clamping driving member can be any one of a cylinder, a linear motor, a motor and a screw nut, etc., which is not limited here.

In some embodiments, as shown in FIG. 3, the end surface tape processing module 102 further comprises a pressing assembly 9. The pressing assembly 9 is arranged on the upper side of the workbench 101. The pressing assembly 9 comprises a pressing driving member and a pressing member. The pressing member is configured to abut against the large surface 206 of the battery cell 20. The pressing driving member is transmission connected to the pressing member , and is configured to drive the pressing member to move toward or away from the bearing surface of the workbench 101 in the vertical direction.

It should be explained that the above-mentioned pressing member is configured to abut against the large surface 206 of the battery cell 20, which means that the pressing member is configured to press against the large surface 206 of the battery cell 20 with force, so as to press the separator, the positive electrode sheet and the negative electrode sheet of the battery cell 20 more tightly in the vertical direction, that is, the battery cell 20 can be pressed more tightly in the vertical direction.

Therefore, when the battery cell 20 with the tape to be processed is carried on the workbench 101, the pressing member can be driven by the pressing driving member to move toward the bearing surface of the workbench 101 until the pressing member abuts against the large surface 206 of the battery cell 20, so that the battery cell 20 can be pressed more tightly in the vertical direction, and the cutting effect of the first cutter 21 can be better. When the end surface tape of the battery cell 20 is cut, the pressing member can be driven by the pressing driving member to move in the vertical direction away from the bearing surface of the workbench 101, which is simple and convenient to operate.

The pressing driving member can be any one of a cylinder, an electric cylinder, a motor and a screw nut, etc., which is not limited here.

The pressing member can be any one of a pressing block, a pressing plate, etc., which is not limited here.

In some embodiments, as shown in FIG. 4, the end surface tape processing module 102 further comprises a second limiting assembly 7b. The second limiting assembly 7b is arranged on the workbench 101 and is configured to limit the position of the battery cell 20 on the workbench 101 along the first direction.

Therefore, when the battery cell 20 is placed on the workbench 101, the battery cell 20 is pushed in a direction perpendicular to the first direction and parallel to the bearing surface of the workbench 101 until the battery cell 20 abuts against the second limiting assembly 7b, so that the battery cell 20 can be placed in place on the workbench 101 in a direction perpendicular to the first direction and parallel to the bearing surface of the workbench 101, and the operation is simple and convenient.

The second limiting assembly 7b can have multiple implementations. In one implementation, the second limiting assembly 7b can comprise a limiting member. The limiting member is arranged on the workbench 101, and the structure is simple and easy to implement.

In another possible implementation, the second limiting assembly 7b comprises a limiting driving member and a second limiting member. The second limiting member is arranged on the bearing surface of the workbench 101. The limiting driving member is transmission connected to the second limiting member, and is configured to drive the second limiting member to move along the first direction.

Thus, the second limiting member can be driven to move along the first direction by the limiting driving member to adjust the position of the second limiting member on the workbench 101 along the first direction. Thus, the position of the second limiting member on the workbench 101 can be adjusted according to the size of the battery cell 20, so that the end surface of the battery cell 20 can be located on the cutting track of the first cutter 21 when the second limiting member limits the battery cells 20 of different sizes, and the cutting steps for the end surface tape of the battery cell 20 are simplified, thereby saving time and effort, and improving the cutting efficiency for the end surface tape of the battery cell 20.

The limiting driving member can be any one of a combination of a motor and a screw nut, a cylinder, a linear motor, etc., which is not limited here.

The second limiting member can be any one of a limit block, a limit plate, a limit support 33, etc., which is not limited here.

In some embodiments, as shown in FIG. 2 and FIG. 3, the end surface tape processing module 102 further comprises a second controller 8b. The second controller 8b is disposed on the workbench 101 and electrically connected to the first driving member, and is configured to control the start and stop of the first driving member.

Thus, after placing the battery cell 20 with the tape to be processed on the workbench 101, the first driving member can be controlled to drive the first cutter 21 to cut off the end surface tape by setting relevant parameters and programs on the second controller 8b, which has a high degree of automation, saves time and effort, and effectively improves the cutting efficiency of the end surface tape, thereby improving the processing efficiency of the tape of the battery cell 20.

For example, after placing the battery cell 20 with the tape to be processed on the workbench 101, the cutting parameters can be set on the second controller 8b, and the power supply can be turned on to start cutting the end surface tape. Then, the pressing driving member is started to drive the pressing member to move downward so as to press the large surface 206 of the battery cell 20 more tightly. Then, the first driving member is started to drive the first cutter 21 to move downward to cut the end surface tape on the end surface of the battery cell 20 to complete the cutting of the end surface tape.

In some embodiments, as shown in FIG. 2 to FIG. 5, the workbench 101 comprises a first workbench 1a and a second workbench 1b. The second workbench 1b is arranged downstream of the first workbench 1a. The first workbench 1a is configured to carry the battery cell 20 with the end surface tape to be processed. The second workbench 1b is configured to carry the battery cell 20 with the termination tape 203 to be processed. The battery cell recycling device 10 further comprises a transfer module. The transfer module is movably arranged between the first workbench 1a and the second workbench 1b.

Thus, the end surface tape of the battery cell 20 can be cut on the first workbench 1a, and the large surface separator 207 with the termination tape 203 attached can be cut off on the second workbench 1b, so that the tapes attached to the battery cell 20 can be processed in steps, further improving the processing efficiency of the tape on the battery cell 20.

The transfer module can be movably arranged between the first workbench 1a and the second workbench 1b, which can effectively improve the efficiency of moving the battery cell 20 from the first workbench 1a to the second workbench 1b, thereby further improving the processing efficiency of the tape on the battery cell 20.

The first workbench 1a and the second workbench 1b can be the same workbench 101, or different workbenches 101, which is not limited here.

The transfer module may comprise a transfer driving member and a clamping member. The transfer driving member is connected to the clamping member to drive the clamping member to move between the first workbench 1a and the second workbench 1b, and the structure is simple and easy to implement.

The transfer driving member can be any one of an electric cylinder, a pneumatic cylinder, a linear motor, etc., and is not limited here.

The present disclosure also provides a method for processing a battery cell tape, which is applied to the battery cell recycling device 10 described in any one of the above embodiments. The tape comprises an end surface tape and a termination tape 203. As shown in FIG. 10, the method for processing battery cell tape comprises the following steps:
S100, cutting, by a first cutter, end surface tapes located at two end surfaces of the battery cell.
S200, lifting, by a separator lifting assembly, a large surface separator located on a large surface of the battery cell and attached with a termination tape.
S300, cutting off, by a second cutter, the large surface separator along a first direction.

Thus, when processing the tape adhered to the battery cell 20, the end surface tapes on the two end surfaces of the battery cell 20 can be cut by the first cutter 21 first to release the restraint and fixation of the end surface tapes on the two end surfaces of the battery cell 20. Then, the large surface separator 207 of the battery cell 20 with the end surface tapes cut can be lifted by the separator lifting assembly 3, so that a gap is formed between the large surface separator 207 and the large surface 206 of the battery cell 20, and an opening can be formed between the two ends of the large surface separator 207 close to the end surfaces and the large surface 206 of the battery cell 20. Then, the large surface separator 207 is cut off by moving the second cutter 41 along the first direction, so that the battery cell 20 can be freed from the restraint and fixation of the termination tape 203. In the process of cutting off the large surface separator 207 by the second cutter 41, the large surface separator 207 is separated from the large surface 206 of the battery cell 20, which can effectively prevent the other separators of the battery cell 20, the positive electrode sheet and the negative electrode sheet of the battery cell 20 from being cut, effectively improve the processing effect of the tape of the battery cell 20, and improve the subsequent recovery rate of the positive electrode sheet, the negative electrode sheet and the separator of the battery cell 20. In addition, compared with the method of manually processing the tape attached to the battery cell 20, the processing efficiency of the tape attached to the battery cell 20 can be effectively improved, and time and labor are saved.

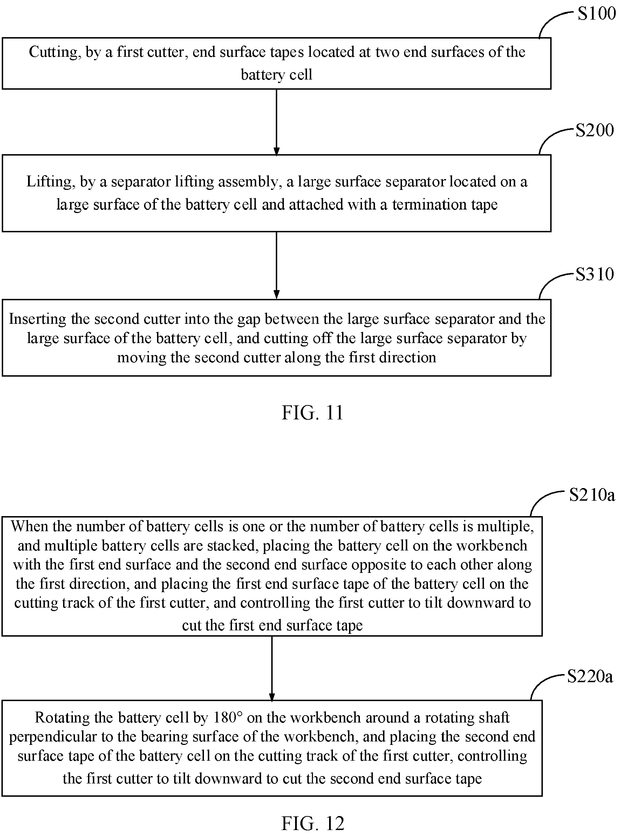

In some embodiments, as shown in FIG. 11, cutting off, by the second cutter, the large surface separator along the first direction may comprise the following steps:
S310, inserting the second cutter into the gap between the large surface separator and the large surface of the battery cell, and cutting off the large surface separator by moving the second cutter along the first direction.

Thus, when the large surface separator 207 is cut off by the second cutter 41, the second cutter 41 is less likely to cut the large surface 206 of the battery cell 20, which effectively prevents the second cutter 41 from cutting other separators, the positive electrode sheet and the negative electrode sheet of the battery cell 20, and enables the second cutter 41 to cut off the large surface separator 207 more fully.

In addition, the battery cell recycling device 10 may further comprise a blowing member 5, so that after the large surface separator 207 is cut off by the second cutter 41, the cut large surface separator 207 can be blown away from the large surface 206 of the battery cell 20 by the blowing member 5. Thus, when the battery cell 20 is subsequently unwound and disassembled, the cut large surface separator 207 can be picked up more easily, thereby improving the efficiency of unwinding and disassembling the battery cell 20.

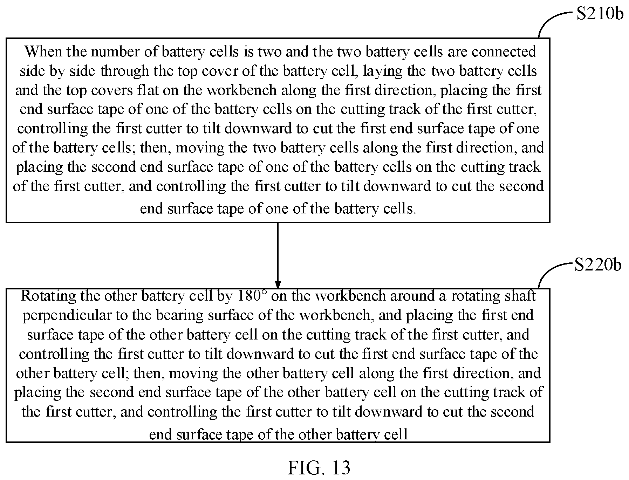

In some embodiments, the battery cell 20 has a first end surface and a second end surface that are arranged opposite to each other. The end surface tape comprises a first end surface tape located at the first end surface and a second end surface tape located at the second end surface. The first cutter 21 is located on the upper side of the bearing surface of the workbench 101. As shown in FIG. 12 and FIG. 13, cutting, by the first cutter, the end surface tapes located at the two end surfaces of the battery cell may comprise the following steps:
S210a, when the number of battery cells is one or the number of battery cells is multiple, and multiple battery cells are stacked, the battery cell is placed on the workbench with the first end surface and the second end surface opposite to each other along the first direction, and the first end surface tape of the battery cell is placed on the cutting track of the first cutter. The first cutter is controlled to tilt downward to cut the first end surface tape.
S220a, the battery cell is rotated 180° on the workbench around a rotating shaft perpendicular to the bearing surface of the workbench, and the second end surface tape of the battery cell is placed on the cutting track of the first cutter. The first cutter is controlled to tilt downward to cut the second end surface tape.

Alternatively, cutting, by the first cutter, the end surface tapes located at the two end surfaces of the battery cell may comprise the following steps:
S210b, when the number of battery cells is two and the two battery cells are connected side by side through the top cover of the battery cell, the two battery cells and the top covers are laid flat on the workbench along the first direction, and the first end surface tape of one of the battery cells is placed on the cutting track of the first cutter, and the first cutter is controlled to tilt downward to cut the first end surface tape of one of the battery cells. Then, the two battery cells are moved along the first direction, and the second end surface tape of one of the battery cells is placed on the cutting track of the first cutter, and the first cutter is controlled to tilt downward to cut the second end surface tape of one of the battery cells.
S220b, another battery cell is rotated 180° on the workbench around a rotating shaft perpendicular to the bearing surface of the workbench, and the first end surface tape of the other battery cell is placed on the cutting track of the first cutter, and the first cutter is controlled to tilt downward to cut the first end surface tape of the other battery cell. Then the other battery cell is moved along the first direction, and the second end surface tape of the other battery cell is placed on the cutting track of the first cutter, and the first cutter is controlled to tilt downward to cut the second end surface tape of the other battery cell.

Thus, regardless of whether it is a single battery cell 20, a plurality of stacked battery cells 20, or two battery cells 20 connected side by side through the top cover of the battery cell 20, the end surface tape processing module 102 in the above-mentioned battery cell recycling device 10 can process the end surface tapes located at the two end surfaces of the battery cell 20, so that the end surface tape processing module 102 can process the end surface tapes of different forms of battery cells 20, effectively improving the applicability of the battery cell recycling device 10.

For example, when processing the end surface tape of the battery cell 20 with the tape to be processed, first, the battery cell 20 can be placed on the workbench 101 (such as the first workbench 1a). The bottom surface tape 202 of the battery cell 20 is placed on the cutting track of the first cutter 21. The battery cell 20 can be fixed by the second clamp assembly 6b. The pressing member can be driven downward by the pressing driving member to press the large surface 206 of the battery cell 20 tightly. Then, the first cutter 21 is driven by the first driving member to move downward inclined to cut the bottom surface tape 202 of the battery cell 20. At this time, if a single battery cell 20 or multiple stacked battery cells 20 are to be processed, the pressing member is lifted, and the battery cell 20 is rotated 180° around the rotating axis perpendicular to the bearing surface of the workbench 101, so that the top surface tape 201 of the battery cell 20 is located on the cutting track of the first cutter 21. Then, the pressing member is pressed against the large surface 206 of the battery cell 20 tightly, and then the first cutter 21 is driven by the first driving member to move downward inclined to cut the top surface tape 201 of the battery cell 20. If two battery cells 20 connected side by side through the top cover of the battery cell 20 are to be processed, the pressing member is lifted, and the two battery cells 20 are moved along the first direction, so that the top surface tape 201 of the battery cell 20 with the bottom surface tape 202 cut is located on the cutting track of the first cutter 21. Then the pressing member is pressed against the large surface 206 of the battery cell 20 tightly, and then the first cutter 21 is driven by the first driving member to move downward inclined to cut the top surface tape 201 of the battery cell 20. Then, the bottom surface tape 202 of the other battery cell 20 without the tape processed is placed on the cutting track of the first cutter 21. The above cutting actions are repeated, and the bottom surface tape 202 and the top surface tape 201 of the battery cell 20 are cut in turn.

When processing a single battery cell 20 or a plurality of stacked battery cells 20, the top surface tape 201 of the battery cell 20 can also be cut first, and then the bottom surface tape 202 of the battery cell 20 can be cut, which is not limited here.

In some embodiments, before the end surface tapes on the two end surfaces of the battery cell 20 are cut by the first cutter 21, the battery cell 20 to be processed can be carried and fixed on the workbench 101, so that when the tapes on the battery cell 20 are processed, the battery cell 20 is less likely to shake or move, so that the processing of the tapes on the battery cell 20 can have a better effect.

In addition, when the workbench 101 comprises a first workbench 1a and a second workbench 1b, the end surface tapes of the battery cell 20 can be processed on the first workbench 1a, and the termination surface tape 203 of the battery cell 20 can be processed on the second workbench 1b. After the end surface tapes of the battery cell 20 are processed on the first workbench 1a, the battery cell 20 with the end surface tapes processed on the first workbench 1a can be transferred to the second workbench 1b through the transfer module.

Finally, it should be noted that the above embodiments are only used to illustrate the technical solutions of the present invention, rather than to limit it. Although the present disclosure has been described in detail with reference to the aforementioned embodiments, those skilled in the art should understand that they can still modify the technical solutions described in the aforementioned embodiments, or replace some or all of the technical features therein with equivalents. However, these modifications or replacements do not cause the essence of the corresponding technical solutions to deviate from the scope of the technical solutions of the embodiments of the present disclosure.

## Claims

1. A battery cell recycling device for processing tapes attached to a battery cell, comprising:
a workbench (101), configured to carry the battery cell (20) with the tapes to be processed;
an end surface tape processing module (102), comprising a first cutter assembly (2), wherein the first cutter assembly (2) comprises a first cutter (21) and a first driving member, the first driving member is transmission connected to the first cutter (21), the first driving member is configured to drive the first cutter (21) to move toward or away from end surfaces of the battery cell (20) to cut end surface tapes located at two end surfaces of the battery cell (20); and
a termination tape processing module (103) arranged downstream of the end surface tape processing module (102), comprising a separator lifting assembly (3) and a second cutter assembly (4), wherein the separator lifting assembly (3) is configured to lift a large surface separator (207) on a large surface (206) of the battery cell (20) and attached with a termination tape, to separate the large surface separator (207) from the large surface (206) of the battery cell (20), the second cutter assembly (4) comprises a second cutter (41) and a second driving member (42), the second driving member (42) is transmission connected to the second cutter (41) and is configured to drive the second cutter (41) to move along a first direction to cut off the large surface separator (207), the first direction is an arrangement direction of the two end surfaces of the battery cell (20).

2. The battery cell recycling device according to claim 1, wherein the separator lifting assembly (3) comprises:
a separator lifting member (31) located on an upper side of the workbench (101), wherein there are multiple separator lifting members (31), the multiple separator lifting members (31) are arranged at an interval along the first direction, and two separator lifting members (31) located at two ends of the multiple separator lifting members (31) are respectively arranged close to the two end surfaces of the battery cell (20), the separator lifting member (31) is provided with a vacuum adsorption hole (311) at an end toward the workbench (101), an adsorption end of the vacuum adsorption hole (311) is arranged toward a bearing surface of the workbench, and a suction end of the vacuum adsorption hole (311) is connected to a vacuum pumping device;
a separator lifting driving member (32) transmission connected to the separator lifting member (31) and configured to drive the separator lifting member (31) to move toward or away from the workbench (101) to enable the separator lifting member (31) to lift the large surface (207) separator; and
a support (33) fixedly connected to the workbench (101), wherein the separator lifting driving member (32) is arranged on the support (33), and multiple separator lifting members (31) are arranged on the support (33) at an interval along the first direction.

3. The battery cell recycling device according to claim 1 or 2, wherein the second cutter (41) is capable of extending between the large surface separator (207) and the large surface (206) of the battery cell (20) along the first direction, and a blade of the second cutter (41) faces toward the large surface separator (207) to cut off the large surface separator (207) when the second cutter (41) moves along the first direction.

4. The battery cell recycling device according to any one of claims 1 to 3, wherein the second cutter (41) comprises a blade body (411) and a blade tip (412), the blade body (411) extends along the first direction, and the blade tip (412) is arranged on at least one of two ends of the blade body (411) opposite to each other along the first direction; and
wherein the blade tip (412) is configured as one of the following:
a thickness of the blade tip (412) along a direction perpendicular to a bearing surface of the workbench (101) gradually increases from an end of the blade tip (412) away from the blade body to an end close to the blade body (411); or
a width of the blade tip (412) along a direction perpendicular to the first direction and parallel to the bearing surface of the workbench (101) gradually widens from the end of the blade tip (412) away from the blade body (411) to the end close to the blade body (411).

5. The battery cell recycling device according to any one of claims 1 to 4, wherein the termination tape processing module (103) further comprises a blowing member (5), a blowing port of the blowing member is arranged on an upper side of a bearing surface of the workbench (101), and the blowing member (5) is configured to blow a cut large surface separator away from the large surface of the battery cell (20).

6. The battery cell recycling device according to any one of claims 1 to 5, wherein the termination tape processing module (103) further comprises a first clamp assembly (6a) configured to clamp or release the battery cell (20) carried on the workbench (101),
optionally, the first clamp assembly (6a) comprises a first clamping driving member, a second clamping driving member, a first clamp, a second clamp and a first limiting assembly (7a), the first clamp and the second clamp are arranged oppositely along the first direction, and are configured to clamp the two end surfaces of the battery cell (20), the first clamping driving member is transmission connected to the first clamp , and is configured to drive the first clamp to move along the first direction, the second clamping driving member is transmission connected to the second clamp, and is configured to drive the second clamp to move along the first direction, the first limiting assembly (7a) is configured to limit a position of the battery cell (20) on the workbench (101) in a direction perpendicular to the first direction and parallel to a bearing surface of the workbench (101), and the first clamp, the second clamp and the first limiting assembly (7a) are enclosed to form a space for fixing the battery cell (20).

7. The battery cell recycling device according to any one of claims 1 to 6, wherein the termination tape processing module (103) further comprises a first controller (8a), the first controller (8a) is arranged on the workbench (101) and electrically connected to the separator lifting assembly (3) and the second cutter assembly (4), and is configured to control the separator lifting assembly (3) to lift the large surface separator (207) and start and stop of the second driving member (42).

8. The battery cell recycling device according to any one of claims 1 to 7, wherein the first cutter (21) is located on an upper side of the workbench (101), and a cutting track of the first cutter (21) has an angle with a plane where the end surface of the battery cell (20) is located.

9. The battery cell recycling device according to any one of claims 1 to 8, wherein the end surface tape processing module (102) further comprises a pressing assembly (9), the pressing assembly (9) is arranged on an upper side of the workbench (101), and the pressing assembly (9) comprises a pressing driving member and a pressing member, the pressing member is configured to abut against the large surface of the battery cell (20), and the pressing driving member is transmission connected to the pressing member , and is configured to drive the pressing member to move toward or away from a bearing surface of the workbench (101) in a vertical direction.

10. The battery cell recycling device according to any one of claims 1 to 9, wherein the end surface tape processing module (102) further comprises a second limiting assembly (7b), the second limiting assembly (7b) is arranged on the workbench (101) and is configured to limit a position of the battery cell (20) on the workbench (101) along the first direction;
the second limiting assembly (7b) comprises a limiting driving member and a second limiting member, the second limiting member is arranged on a bearing surface of the workbench (101), and the limiting driving member is transmission connected to the second limiting member to drive the second limiting member to move along the first direction.

11. The battery cell recycling device according to claims 1 to 10, wherein the end surface tape processing module (102) further comprises a second controller (8b), the second controller (8b) is arranged on the workbench (101), the second controller (8b) is electrically connected to the first driving member, and the second controller (8b) is configured to control start and stop of the first driving member.

12. The battery cell recycling device according to any one of claims 1 to 11, wherein the workbench (101) comprises a first workbench (1a) and a second workbench (1b), the second workbench (1b) is arranged downstream of the first workbench (1a), the first workbench (1a) is configured to carry the battery cell (20) with the end surface tape to be processed, and the second workbench (1b) is configured to carry the battery cell (20) with the termination tape to be processed; and
the battery cell recycling device further comprises a transfer module, the transfer module is movably arranged between the first workbench (1a) and the second workbench (1b).

13. A method for processing a battery cell tape, performed by a cell recycling device according to any one of claims 1 to 12, the tape comprises end surface tapes and a termination tape, and the method for processing the battery cell tape comprises:
(S100) cutting, by a first cutter (21), the end surface tapes located at two end surfaces of the battery cell (20);
(S200) lifting, by a separator lifting assembly (3), a large surface separator (207) located at a large surface of the battery cell and attached with the termination tape; and
(S300) cutting off, by a second cutter (41), the large surface separator (207) along a first direction.

14. The method for processing the battery cell tape according to claim 13, wherein cutting off, by the second cutter (41), the large surface separator (207) along the first direction comprises:
(S310) inserting the second cutter (41) into a gap between the large surface separator (207) and the large surface of the battery cell (20), and cutting off the large surface separator (207) by moving the second cutter (41) along the first direction.

15. The method for processing the battery cell tape according to claim 13 or 14, wherein the battery cell (20) has a first end surface and a second end surface that are arranged opposite to each other, the end surface tapes comprise a first end surface tape located at the first end surface and a second end surface tape located at the second end surface, the first cutter (21) is located on an upper side of a bearing surface of the workbench (101), and cutting, by the first cutter (21), the end surface tapes located at the two end surfaces of the battery cell (20) comprises:
(S210a) in a case where a number of the battery cell (20) is one or the number of the battery cells (20) is multiple, and the multiple battery cells (20) are stacked, placing the battery cell (20) on the workbench (101) with the first end surface and the second end surface arranged opposite to each other along the first direction, and placing the first end surface tape of the battery cell (20) on a cutting track of the first cutter (21), and controlling the first cutter (21) to tilt downward to cut the first end surface tape; and
(S220a) rotating the battery cell (20) by 180° on the workbench (101) around a rotation axis perpendicular to the bearing surface of the workbench, and placing the second end surface tape of the battery cell (20) on the cutting track of the first cutter (21), and controlling the first cutter (21) to tilt downward to cut the second end surface tape; or,
(S210b) in a case where the number of the battery cells (20) is two, and the two battery cells (20) are connected side by side through top covers of the battery cells (20), laying the two battery cells (20) and the top covers flat on the workbench (101) along the first direction, and placing the first end surface tape of one of the battery cells (20) on the cutting track of the first cutter (21), and controlling the first cutter (21) to tilt downward to cut the first end surface tape of one of the battery cells (20), and then, moving the two battery cells (20) along the first direction, and placing the second end surface tape of one of the battery cells (20) on the cutting track of the first cutter (21), and controlling the first cutter (21) to tilt downward to cut the second end surface tape of one of the battery cells (20); and
(S220b) rotating the other battery cell (20) by rotated 180° on the workbench (101) around the rotation axis perpendicular to the bearing surface of the workbench (101), and placing the first end surface tape of the other battery cell (20) on the cutting track of the first cutter (21), and controlling the first cutter (21) to tilt downward to cut the first end surface tape of the other cell, and then, moving the other battery cell (20) along the first direction, and placing the second end surface tape of the other battery cell (20) on the cutting track of the first cutter (21), and controlling the first cutter (21) to tilt downward to cut the second end surface tape of the other battery cell (20).

## Patentansprüche

1. Batteriezellen-Recyclingvorrichtung zur Verarbeitung von an einer Batteriezelle angebrachten Klebebändern, umfassend:
einen Arbeitstisch (101), der dazu konfiguriert ist, die Batteriezelle (20) mit den zu verarbeitenden Klebebändern zu tragen;
ein Stirnflächen-Klebeband-Verarbeitungsmodul (102), umfassend eine erste Schneidmesserbaugruppe (2), wobei die erste Schneidmesserbaugruppe (2) ein erstes Schneidmesser (21) und ein erstes Antriebselement umfasst, das erste Antriebselement antriebsmäßig mit dem ersten Schneidmesser (21) verbunden ist, das erste Antriebselement dazu konfiguriert ist, das erste Schneidmesser (21) anzutreiben, sich auf Stirnflächen der Batteriezelle (20) zu oder von diesen weg zu bewegen, um an zwei Stirnflächen der Batteriezelle (20) befindliche Stirnflächen-Klebebänder zu schneiden; und
ein Abschlussklebeband-Verarbeitungsmodul (103), das stromabwärts des Stirnflächen-Klebeband-Verarbeitungsmoduls (102) angeordnet ist, umfassend eine Separator-Hebebaugruppe (3) und eine zweite Schneidmesserbaugruppe (4), wobei die Separator-Hebebaugruppe (3) dazu konfiguriert ist, einen Großflächen-Separator (207) auf einer Großfläche (206) der Batteriezelle (20), an dem ein Abschlussklebeband angebracht ist, anzuheben, um den Großflächen-Separator (207) von der Großfläche (206) der Batteriezelle (20) zu trennen, die zweite Schneidmesserbaugruppe (4) ein zweites Schneidmesser (41) und ein zweites Antriebselement (42) umfasst, das zweite Antriebselement (42) antriebsmäßig mit dem zweiten Schneidmesser (41) verbunden ist und dazu konfiguriert ist, das zweite Schneidmesser (41) anzutreiben, sich entlang einer ersten Richtung zu bewegen, um den Großflächen-Separator (207) abzuschneiden, wobei die erste Richtung eine Anordnungsrichtung der zwei Stirnflächen der Batteriezelle (20) ist.

2. Batteriezellen-Recyclingvorrichtung nach Anspruch 1, wobei die Separator-Hebebaugruppe (3) umfasst:
ein Separator-Hebeelement (31), das sich auf einer Oberseite des Arbeitstisches (101) befindet, wobei mehrere Separator-Hebeelemente (31) vorhanden sind, die mehreren Separator-Hebeelemente (31) in einem Abstand entlang der ersten Richtung angeordnet sind und zwei Separator-Hebeelemente (31), die sich an zwei Enden der mehreren Separator-Hebeelemente (31) befinden, jeweils nahe den zwei Stirnflächen der Batteriezelle (20) angeordnet sind, das Separator-Hebeelement (31) an einem dem Arbeitstisch (101) zugewandten Ende mit einer Vakuum-Ansaugöffnung (311) versehen ist, ein Ansaugende der Vakuum-Ansaugöffnung (311) zu einer Auflagefläche des Arbeitstisches hin angeordnet ist und ein Saugende der Vakuum-Ansaugöffnung (311) mit einer Vakuumpumpvorrichtung verbunden ist;
ein Separator-Hebe-Antriebselement (32), das antriebsmäßig mit dem Separator-Hebeelement (31) verbunden und dazu konfiguriert ist, das Separator-Hebeelement (31) anzutreiben, sich auf den Arbeitstisch (101) zu oder von diesem weg zu bewegen, um zu ermöglichen, dass das Separator-Hebeelement (31) den Großflächen-Separator (207) anhebt; und
eine Halterung (33), die fest mit dem Arbeitstisch (101) verbunden ist, wobei das Separator-Hebe-Antriebselement (32) an der Halterung (33) angeordnet ist und mehrere Separator-Hebeelemente (31) an der Halterung (33) in einem Abstand entlang der ersten Richtung angeordnet sind.

3. Batteriezellen-Recyclingvorrichtung nach Anspruch 1 oder 2, wobei das zweite Schneidmesser (41) dazu in der Lage ist, sich entlang der ersten Richtung zwischen den Großflächen-Separator (207) und die Großfläche (206) der Batteriezelle (20) zu erstrecken, und eine Klinge des zweiten Schneidmessers (41) dem Großflächen-Separator (207) zugewandt ist, um den Großflächen-Separator (207) abzuschneiden, wenn sich das zweite Schneidmesser (41) entlang der ersten Richtung bewegt.

4. Batteriezellen-Recyclingvorrichtung nach einem der Ansprüche 1 bis 3, wobei das zweite Schneidmesser (41) einen Klingenkörper (411) und eine Klingenspitze (412) umfasst, der Klingenkörper (411) sich entlang der ersten Richtung erstreckt und die Klingenspitze (412) an mindestens einem von zwei Enden des Klingenkörpers (411) angeordnet ist, die einander entlang der ersten Richtung gegenüberliegen; und
wobei die Klingenspitze (412) als eines der Folgenden konfiguriert ist:
eine Dicke der Klingenspitze (412) entlang einer Richtung senkrecht zu einer Auflagefläche des Arbeitstisches (101) nimmt von einem vom Klingenkörper entfernten Ende der Klingenspitze (412) zu einem nahe dem Klingenkörper (411) befindlichen Ende allmählich zu; oder
eine Breite der Klingenspitze (412) entlang einer Richtung senkrecht zur ersten Richtung und parallel zur Auflagefläche des Arbeitstisches (101) verbreitert sich von dem vom Klingenkörper (411) entfernten Ende der Klingenspitze (412) zu dem nahe dem Klingenkörper (411) befindlichen Ende allmählich.

5. Batteriezellen-Recyclingvorrichtung nach einem der Ansprüche 1 bis 4, wobei das Abschlussklebeband-Verarbeitungsmodul (103) ferner ein Blaselement (5) umfasst, ein Blasabschnitt des Blaselements auf einer Oberseite einer Auflagefläche des Arbeitstisches (101) angeordnet ist und das Blaselement (5) dazu konfiguriert ist, einen geschnittenen Großflächen-Separator von der Großfläche der Batteriezelle (20) wegzublasen.

6. Batteriezellen-Recyclingvorrichtung nach einem der Ansprüche 1 bis 5, wobei das Abschlussklebeband-Verarbeitungsmodul (103) ferner eine erste Klemm-Baugruppe (6a) umfasst, die dazu konfiguriert ist, die auf dem Arbeitstisch (101) getragene Batteriezelle (20) zu klemmen oder freizugeben,
optional umfasst die erste Klemm-Baugruppe (6a) ein erstes Klemm-Antriebselement, ein zweites Klemm-Antriebselement, eine erste Klemme, eine zweite Klemme und eine erste Begrenzungsbaugruppe (7a), die erste Klemme und die zweite Klemme sind einander entlang der ersten Richtung gegenüberliegend angeordnet und dazu konfiguriert, die zwei Stirnflächen der Batteriezelle (20) zu klemmen, das erste Klemm-Antriebselement ist antriebsmäßig mit der ersten Klemme verbunden und dazu konfiguriert, die erste Klemme anzutreiben, sich entlang der ersten Richtung zu bewegen, das zweite Klemm-Antriebselement ist antriebsmäßig mit der zweiten Klemme verbunden und dazu konfiguriert, die zweite Klemme anzutreiben, sich entlang der ersten Richtung zu bewegen, die erste Begrenzungsbaugruppe (7a) ist dazu konfiguriert, eine Position der Batteriezelle (20) auf dem Arbeitstisch (101) in einer Richtung senkrecht zur ersten Richtung und parallel zu einer Auflagefläche des Arbeitstisches (101) zu begrenzen, und die erste Klemme, die zweite Klemme und die erste Begrenzungsbaugruppe (7a) umschließen einen Raum zum Fixieren der Batteriezelle (20).

7. Batteriezellen-Recyclingvorrichtung nach einem der Ansprüche 1 bis 6, wobei das Abschlussklebeband-Verarbeitungsmodul (103) ferner eine erste Steuereinheit (8a) umfasst, die erste Steuereinheit (8a) am Arbeitstisch (101) angeordnet und elektrisch mit der Separator-Hebebaugruppe (3) und der zweiten Schneidmesserbaugruppe (4) verbunden ist und dazu konfiguriert ist, die Separator-Hebebaugruppe (3) zu steuern, den Großflächen-Separator (207) anzuheben, sowie Start und Stopp des zweiten Antriebselements (42) zu steuern.

8. Batteriezellen-Recyclingvorrichtung nach einem der Ansprüche 1 bis 7, wobei sich das erste Schneidmesser (21) auf einer Oberseite des Arbeitstisches (101) befindet und eine Schneidbahn des ersten Schneidmessers (21) einen Winkel mit einer Ebene aufweist, in der sich die Stirnfläche der Batteriezelle (20) befindet.

9. Batteriezellen-Recyclingvorrichtung nach einem der Ansprüche 1 bis 8, wobei das Stirnflächen-Klebeband-Verarbeitungsmodul (102) ferner eine Pressbaugruppe (9) umfasst, die Pressbaugruppe (9) auf einer Oberseite des Arbeitstisches (101) angeordnet ist und die Pressbaugruppe (9) ein Press-Antriebselement und ein Presselement umfasst, das Presselement dazu konfiguriert ist, an der Großfläche der Batteriezelle (20) anzuliegen, und das Press-Antriebselement antriebsmäßig mit dem Presselement verbunden und dazu konfiguriert ist, das Presselement anzutreiben, sich in einer vertikalen Richtung auf eine Auflagefläche des Arbeitstisches (101) zu oder von dieser weg zu bewegen.

10. Batteriezellen-Recyclingvorrichtung nach einem der Ansprüche 1 bis 9, wobei das Stirnflächen-Klebeband-Verarbeitungsmodul (102) ferner eine zweite Begrenzungsbaugruppe (7b) umfasst, die zweite Begrenzungsbaugruppe (7b) am Arbeitstisch (101) angeordnet und dazu konfiguriert ist, eine Position der Batteriezelle (20) auf dem Arbeitstisch (101) entlang der ersten Richtung zu begrenzen;
die zweite Begrenzungsbaugruppe (7b) umfasst ein Begrenzungs-Antriebselement und ein zweites Begrenzungselement, das zweite Begrenzungselement ist auf einer Auflagefläche des Arbeitstisches (101) angeordnet, und das Begrenzungs-Antriebselement ist antriebsmäßig mit dem zweiten Begrenzungselement verbunden, um das zweite Begrenzungselement anzutreiben, sich entlang der ersten Richtung zu bewegen.

11. Batteriezellen-Recyclingvorrichtung nach den Ansprüchen 1 bis 10, wobei das Stirnflächen-Klebeband-Verarbeitungsmodul (102) ferner eine zweite Steuereinheit (8b) umfasst, die zweite Steuereinheit (8b) am Arbeitstisch (101) angeordnet ist, die zweite Steuereinheit (8b) elektrisch mit dem ersten Antriebselement verbunden ist und die zweite Steuereinheit (8b) dazu konfiguriert ist, Start und Stopp des ersten Antriebselements zu steuern.

12. Batteriezellen-Recyclingvorrichtung nach einem der Ansprüche 1 bis 11, wobei der Arbeitstisch (101) einen ersten Arbeitstisch (1a) und einen zweiten Arbeitstisch (1b) umfasst, der zweite Arbeitstisch (1b) stromabwärts des ersten Arbeitstisches (1a) angeordnet ist, der erste Arbeitstisch (1a) dazu konfiguriert ist, die Batteriezelle (20) mit dem zu verarbeitenden Stirnflächen-Klebeband zu tragen, und der zweite Arbeitstisch (1b) dazu konfiguriert ist, die Batteriezelle (20) mit dem zu verarbeitenden Abschlussklebeband zu tragen; und
die Batteriezellen-Recyclingvorrichtung ferner ein Transfermodul umfasst, wobei das Transfermodul beweglich zwischen dem ersten Arbeitstisch (1a) und dem zweiten Arbeitstisch (1b) angeordnet ist.

13. Verfahren zum Verarbeiten eines Batteriezellen-Klebebands, durchgeführt durch eine Zellen-Recyclingvorrichtung nach einem der Ansprüche 1 bis 12, wobei das Klebeband Stirnflächen-Klebebänder und ein Abschlussklebeband umfasst und das Verfahren zum Verarbeiten des Batteriezellen-Klebebands umfasst:
(S100) Schneiden, durch ein erstes Schneidmesser (21), der an zwei Stirnflächen der Batteriezelle (20) befindlichen Stirnflächen-Klebebänder;
(S200) Anheben, durch eine Separator-Hebebaugruppe (3), eines Großflächen-Separators (207), der sich an einer Großfläche der Batteriezelle befindet und an dem das Abschlussklebeband angebracht ist; und
(S300) Abschneiden, durch ein zweites Schneidmesser (41), des Großflächen-Separators (207) entlang einer ersten Richtung.

14. Verfahren zum Verarbeiten des Batteriezellen-Klebebands nach Anspruch 13, wobei das Abschneiden, durch das zweite Schneidmesser (41), des Großflächen-Separators (207) entlang der ersten Richtung umfasst:
(S310) Einführen des zweiten Schneidmessers (41) in einen Spalt zwischen dem Großflächen-Separator (207) und der Großfläche der Batteriezelle (20) und Abschneiden des Großflächen-Separators (207) durch Bewegen des zweiten Schneidmessers (41) entlang der ersten Richtung.

15. Verfahren zum Verarbeiten des Batteriezellen-Klebebands nach Anspruch 13 oder 14, wobei die Batteriezelle (20) eine erste Stirnfläche und eine zweite Stirnfläche aufweist, die einander gegenüberliegend angeordnet sind, die Stirnflächen-Klebebänder ein erstes Stirnflächen-Klebeband, das sich an der ersten Stirnfläche befindet, und ein zweites Stirnflächen-Klebeband, das sich an der zweiten Stirnfläche befindet, umfassen, sich das erste Schneidmesser (21) auf einer Oberseite einer Auflagefläche des Arbeitstisches (101) befindet und das Schneiden, durch das erste Schneidmesser (21), der an den zwei Stirnflächen der Batteriezelle (20) befindlichen Stirnflächen-Klebebänder umfasst:
(S210a) in einem Fall, in dem eine Anzahl der Batteriezelle (20) eins ist oder die Anzahl der Batteriezellen (20) mehrere ist und die mehreren Batteriezellen (20) gestapelt sind, Platzieren der Batteriezelle (20) auf dem Arbeitstisch (101), wobei die erste Stirnfläche und die zweite Stirnfläche einander entlang der ersten Richtung gegenüberliegend angeordnet sind, und Platzieren des ersten Stirnflächen-Klebebands der Batteriezelle (20) auf einer Schneidbahn des ersten Schneidmessers (21), und Steuern des ersten Schneidmessers (21), sich nach unten zu neigen, um das erste Stirnflächen-Klebeband zu schneiden; und
(S220a) Drehen der Batteriezelle (20) um 180° auf dem Arbeitstisch (101) um eine Drehachse senkrecht zur Auflagefläche des Arbeitstisches, und Platzieren des zweiten Stirnflächen-Klebebands der Batteriezelle (20) auf der Schneidbahn des ersten Schneidmessers (21), und Steuern des ersten Schneidmessers (21), sich nach unten zu neigen, um das zweite Stirnflächen-Klebeband zu schneiden; oder
(S210b) in einem Fall, in dem die Anzahl der Batteriezellen (20) zwei ist und die zwei Batteriezellen (20) nebeneinander durch obere Abdeckungen der Batteriezellen (20) verbunden sind, flaches Auflegen der zwei Batteriezellen (20) und der oberen Abdeckungen auf den Arbeitstisch (101) entlang der ersten Richtung, und Platzieren des ersten Stirnflächen-Klebebands einer der Batteriezellen (20) auf der Schneidbahn des ersten Schneidmessers (21), und Steuern des ersten Schneidmessers (21), sich nach unten zu neigen, um das erste Stirnflächen-Klebeband einer der Batteriezellen (20) zu schneiden, und anschließend Bewegen der zwei Batteriezellen (20) entlang der ersten Richtung und Platzieren des zweiten Stirnflächen-Klebebands einer der Batteriezellen (20) auf der Schneidbahn des ersten Schneidmessers (21), und Steuern des ersten Schneidmessers (21), sich nach unten zu neigen, um das zweite Stirnflächen-Klebeband einer der Batteriezellen (20) zu schneiden; und
(S220b) Drehen der anderen Batteriezelle (20) um 180° auf dem Arbeitstisch (101) um die Drehachse senkrecht zur Auflagefläche des Arbeitstisches (101), und Platzieren des ersten Stirnflächen-Klebebands der anderen Batteriezelle (20) auf der Schneidbahn des ersten Schneidmessers (21), und Steuern des ersten Schneidmessers (21), sich nach unten zu neigen, um das erste Stirnflächen-Klebeband der anderen Zelle zu schneiden, und anschließend Bewegen der anderen Batteriezelle (20) entlang der ersten Richtung und Platzieren des zweiten Stirnflächen-Klebebands der anderen Batteriezelle (20) auf der Schneidbahn des ersten Schneidmessers (21), und Steuern des ersten Schneidmessers (21), sich nach unten zu neigen, um das zweite Stirnflächen-Klebeband der anderen Batteriezelle (20) zu schneiden.

## Revendications

1. Dispositif de recyclage de cellule de batterie destiné à traiter des rubans adhésifs fixés à une cellule de batterie, comprenant :
une table de travail (101), configurée pour porter la cellule de batterie (20) avec les rubans adhésifs à traiter ;
un module de traitement de ruban adhésif de surface d'extrémité (102), comprenant un premier ensemble de coupe (2), dans lequel le premier ensemble de coupe (2) comprend un premier couteau (21) et un premier organe d'entraînement, le premier organe d'entraînement est relié en transmission au premier couteau (21), le premier organe d'entraînement est configuré pour entraîner le premier couteau (21) à se déplacer vers des surfaces d'extrémité de la cellule de batterie (20) ou à s'en éloigner afin de couper des rubans adhésifs de surface d'extrémité situés au niveau de deux surfaces d'extrémité de la cellule de batterie (20) ; et
un module de traitement de ruban adhésif de terminaison (103) agencé en aval du module de traitement de ruban adhésif de surface d'extrémité (102), comprenant un ensemble de levage de séparateur (3) et un deuxième ensemble de coupe (4), dans lequel l'ensemble de levage de séparateur (3) est configuré pour soulever un séparateur de grande surface (207) sur une grande surface (206) de la cellule de batterie (20) et auquel est fixé un ruban adhésif de terminaison, afin de séparer le séparateur de grande surface (207) de la grande surface (206) de la cellule de batterie (20), le deuxième ensemble de coupe (4) comprend un deuxième couteau (41) et un deuxième organe d'entraînement (42), le deuxième organe d'entraînement (42) est relié en transmission au deuxième couteau (41) et est configuré pour entraîner le deuxième couteau (41) à se déplacer le long d'une première direction afin de sectionner le séparateur de grande surface (207), la première direction étant une direction d'agencement des deux surfaces d'extrémité de la cellule de batterie (20).

2. Dispositif de recyclage de cellule de batterie selon la revendication 1, dans lequel l'ensemble de levage de séparateur (3) comprend :
un organe de levage de séparateur (31) situé sur un côté supérieur de la table de travail (101), dans lequel il existe plusieurs organes de levage de séparateur (31), les plusieurs organes de levage de séparateur (31) sont agencés à intervalle le long de la première direction, et deux organes de levage de séparateur (31) situés à deux extrémités des plusieurs organes de levage de séparateur (31) sont respectivement agencés à proximité des deux surfaces d'extrémité de la cellule de batterie (20), l'organe de levage de séparateur (31) est pourvu d'un orifice d'adsorption sous vide (311) à une extrémité orientée vers la table de travail (101), une extrémité d'adsorption de l'orifice d'adsorption sous vide (311) est agencée vers une surface porteuse de la table de travail, et une extrémité d'aspiration de l'orifice d'adsorption sous vide (311) est raccordée à un dispositif de pompage sous vide ;
un organe d'entraînement de levage de séparateur (32) relié en transmission à l'organe de levage de séparateur (31) et configuré pour entraîner l'organe de levage de séparateur (31) à se déplacer vers la table de travail (101) ou à s'en éloigner afin de permettre à l'organe de levage de séparateur (31) de soulever le séparateur de grande surface (207) ; et
un support (33) relié fixement à la table de travail (101), dans lequel l'organe d'entraînement de levage de séparateur (32) est agencé sur le support (33), et plusieurs organes de levage de séparateur (31) sont agencés sur le support (33) à intervalle le long de la première direction.

3. Dispositif de recyclage de cellule de batterie selon la revendication 1 ou 2, dans lequel le deuxième couteau (41) est capable de s'étendre entre le séparateur de grande surface (207) et la grande surface (206) de la cellule de batterie (20) le long de la première direction, et une lame du deuxième couteau (41) est orientée vers le séparateur de grande surface (207) afin de sectionner le séparateur de grande surface (207) lorsque le deuxième couteau (41) se déplace le long de la première direction.

4. Dispositif de recyclage de cellule de batterie selon l'une quelconque des revendications 1 à 3, dans lequel le deuxième couteau (41) comprend un corps de lame (411) et une pointe de lame (412), le corps de lame (411) s'étend le long de la première direction, et la pointe de lame (412) est agencée sur au moins l'une de deux extrémités du corps de lame (411) opposées l'une à l'autre le long de la première direction ; et
dans lequel la pointe de lame (412) est configurée comme l'un des éléments suivants :
une épaisseur de la pointe de lame (412) le long d'une direction perpendiculaire à une surface porteuse de la table de travail (101) augmente progressivement depuis une extrémité de la pointe de lame (412) éloignée du corps de lame jusqu'à une extrémité proche du corps de lame (411) ; ou
une largeur de la pointe de lame (412) le long d'une direction perpendiculaire à la première direction et parallèle à la surface porteuse de la table de travail (101) s'élargit progressivement depuis l'extrémité de la pointe de lame (412) éloignée du corps de lame (411) jusqu'à l'extrémité proche du corps de lame (411).

5. Dispositif de recyclage de cellule de batterie selon l'une quelconque des revendications 1 à 4, dans lequel le module de traitement de ruban adhésif de terminaison (103) comprend en outre un organe de soufflage (5), une partie de soufflage de l'organe de soufflage est agencée sur un côté supérieur d'une surface porteuse de la table de travail (101), et l'organe de soufflage (5) est configuré pour souffler un séparateur de grande surface coupé afin de l'éloigner de la grande surface de la cellule de batterie (20).

6. Dispositif de recyclage de cellule de batterie selon l'une quelconque des revendications 1 à 5, dans lequel le module de traitement de ruban adhésif de terminaison (103) comprend en outre un premier ensemble de serrage (6a) configuré pour serrer ou libérer la cellule de batterie (20) portée sur la table de travail (101),
éventuellement, le premier ensemble de serrage (6a) comprend un premier organe d'entraînement de serrage, un deuxième organe d'entraînement de serrage, une première pince, une deuxième pince et un premier ensemble de limitation (7a), la première pince et la deuxième pince sont agencées opposées l'une à l'autre le long de la première direction, et sont configurées pour serrer les deux surfaces d'extrémité de la cellule de batterie (20), le premier organe d'entraînement de serrage est relié en transmission à la première pince et est configuré pour entraîner la première pince à se déplacer le long de la première direction, le deuxième organe d'entraînement de serrage est relié en transmission à la deuxième pince et est configuré pour entraîner la deuxième pince à se déplacer le long de la première direction, le premier ensemble de limitation (7a) est configuré pour limiter une position de la cellule de batterie (20) sur la table de travail (101) dans une direction perpendiculaire à la première direction et parallèle à une surface porteuse de la table de travail (101), et la première pince, la deuxième pince et le premier ensemble de limitation (7a) sont fermés de manière à former un espace pour fixer la cellule de batterie (20).

7. Dispositif de recyclage de cellule de batterie selon l'une quelconque des revendications 1 à 6, dans lequel le module de traitement de ruban adhésif de terminaison (103) comprend en outre un premier contrôleur (8a), le premier contrôleur (8a) est agencé sur la table de travail (101) et relié électriquement à l'ensemble de levage de séparateur (3) et au deuxième ensemble de coupe (4), et est configuré pour commander l'ensemble de levage de séparateur (3) afin de soulever le séparateur de grande surface (207) et pour commander le démarrage et l'arrêt du deuxième organe d'entraînement (42).

8. Dispositif de recyclage de cellule de batterie selon l'une quelconque des revendications 1 à 7, dans lequel le premier couteau (21) est situé sur un côté supérieur de la table de travail (101), et une trajectoire de coupe du premier couteau (21) forme un angle avec un plan dans lequel se trouve la surface d'extrémité de la cellule de batterie (20).

9. Dispositif de recyclage de cellule de batterie selon l'une quelconque des revendications 1 à 8, dans lequel le module de traitement de ruban adhésif de surface d'extrémité (102) comprend en outre un ensemble de pressage (9), l'ensemble de pressage (9) est agencé sur un côté supérieur de la table de travail (101), et l'ensemble de pressage (9) comprend un organe d'entraînement de pressage et un organe de pressage, l'organe de pressage est configuré pour venir en butée contre la grande surface de la cellule de batterie (20), et l'organe d'entraînement de pressage est relié en transmission à l'organe de pressage, et est configuré pour entraîner l'organe de pressage à se déplacer vers une surface porteuse de la table de travail (101) ou à s'en éloigner dans une direction verticale.

10. Dispositif de recyclage de cellule de batterie selon l'une quelconque des revendications 1 à 9, dans lequel le module de traitement de ruban adhésif de surface d'extrémité (102) comprend en outre un deuxième ensemble de limitation (7b), le deuxième ensemble de limitation (7b) est agencé sur la table de travail (101) et est configuré pour limiter une position de la cellule de batterie (20) sur la table de travail (101) le long de la première direction ;
le deuxième ensemble de limitation (7b) comprend un organe d'entraînement de limitation et un deuxième organe de limitation, le deuxième organe de limitation est agencé sur une surface porteuse de la table de travail (101), et l'organe d'entraînement de limitation est relié en transmission au deuxième organe de limitation afin d'entraîner le deuxième organe de limitation à se déplacer le long de la première direction.

11. Dispositif de recyclage de cellule de batterie selon les revendications 1 à 10, dans lequel le module de traitement de ruban adhésif de surface d'extrémité (102) comprend en outre un deuxième contrôleur (8b), le deuxième contrôleur (8b) est agencé sur la table de travail (101), le deuxième contrôleur (8b) est relié électriquement au premier organe d'entraînement, et le deuxième contrôleur (8b) est configuré pour commander le démarrage et l'arrêt du premier organe d'entraînement.

12. Dispositif de recyclage de cellule de batterie selon l'une quelconque des revendications 1 à 11, dans lequel la table de travail (101) comprend une première table de travail (Ia) et une deuxième table de travail (1b), la deuxième table de travail (1b) est agencée en aval de la première table de travail (Ia), la première table de travail (Ia) est configurée pour porter la cellule de batterie (20) avec le ruban adhésif de surface d'extrémité à traiter, et la deuxième table de travail (1b) est configurée pour porter la cellule de batterie (20) avec le ruban adhésif de terminaison à traiter ; et
le dispositif de recyclage de cellule de batterie comprend en outre un module de transfert, le module de transfert étant agencé de manière mobile entre la première table de travail (Ia) et la deuxième table de travail (1b).

13. Procédé de traitement d'un ruban adhésif de cellule de batterie, exécuté par un dispositif de recyclage de cellule selon l'une quelconque des revendications 1 à 12, le ruban adhésif comprend des rubans adhésifs de surface d'extrémité et un ruban adhésif de terminaison, et le procédé de traitement du ruban adhésif de cellule de batterie comprend :
(S100) la coupe, par un premier couteau (21), des rubans adhésifs de surface d'extrémité situés au niveau de deux surfaces d'extrémité de la cellule de batterie (20)
(S200) le levage, par un ensemble de levage de séparateur (3), d'un séparateur de grande surface (207) situé au niveau d'une grande surface de la cellule de batterie et auquel est fixé le ruban adhésif de terminaison ; et
(S300) le sectionnement, par un deuxième couteau (41), du séparateur de grande surface (207) le long d'une première direction.

14. Procédé de traitement du ruban adhésif de cellule de batterie selon la revendication 13, dans lequel le sectionnement, par le deuxième couteau (41), du séparateur de grande surface (207) le long de la première direction comprend :
(S310) l'insertion du deuxième couteau (41) dans un espace entre le séparateur de grande surface (207) et la grande surface de la cellule de batterie (20), et le sectionnement du séparateur de grande surface (207) par déplacement du deuxième couteau (41) le long de la première direction.

15. Procédé de traitement du ruban adhésif de cellule de batterie selon la revendication 13 ou 14, dans lequel la cellule de batterie (20) présente une première surface d'extrémité et une deuxième surface d'extrémité qui sont agencées opposées l'une à l'autre, les rubans adhésifs de surface d'extrémité comprennent un premier ruban adhésif de surface d'extrémité situé au niveau de la première surface d'extrémité et un deuxième ruban adhésif de surface d'extrémité situé au niveau de la deuxième surface d'extrémité, le premier couteau (21) est situé sur un côté supérieur d'une surface porteuse de la table de travail (101), et la coupe, par le premier couteau (21), des rubans adhésifs de surface d'extrémité situés au niveau des deux surfaces d'extrémité de la cellule de batterie (20) comprend :
(S210a) dans un cas où un nombre de la cellule de batterie (20) est un ou où le nombre des cellules de batterie (20) est multiple, et les multiples cellules de batterie (20) sont empilées, le placement de la cellule de batterie (20) sur la table de travail (101) avec la première surface d'extrémité et la deuxième surface d'extrémité agencées opposées l'une à l'autre le long de la première direction, et le placement du premier ruban adhésif de surface d'extrémité de la cellule de batterie (20) sur une trajectoire de coupe du premier couteau (21), et la commande du premier couteau (21) pour l'incliner vers le bas afin de couper le premier ruban adhésif de surface d'extrémité ; et
(S220a) la rotation de la cellule de batterie (20) de 180° sur la table de travail (101) autour d'un axe de rotation perpendiculaire à la surface porteuse de la table de travail, et le placement du deuxième ruban adhésif de surface d'extrémité de la cellule de batterie (20) sur la trajectoire de coupe du premier couteau (21), et la commande du premier couteau (21) pour l'incliner vers le bas afin de couper le deuxième ruban adhésif de surface d'extrémité ; ou,
(S210b) dans un cas où le nombre des cellules de batterie (20) est deux, et les deux cellules de batterie (20) sont reliées côte à côte par des couvercles supérieurs des cellules de batterie (20), la pose à plat des deux cellules de batterie (20) et des couvercles supérieurs sur la table de travail (101) le long de la première direction, et le placement du premier ruban adhésif de surface d'extrémité de l'une des cellules de batterie (20) sur la trajectoire de coupe du premier couteau (21), et la commande du premier couteau (21) pour l'incliner vers le bas afin de couper le premier ruban adhésif de surface d'extrémité de l'une des cellules de batterie (20), puis le déplacement des deux cellules de batterie (20) le long de la première direction, et le placement du deuxième ruban adhésif de surface d'extrémité de l'une des cellules de batterie (20) sur la trajectoire de coupe du premier couteau (21), et la commande du premier couteau (21) pour l'incliner vers le bas afin de couper le deuxième ruban adhésif de surface d'extrémité de l'une des cellules de batterie (20) ; et
(S220b) la rotation de l'autre cellule de batterie (20) de 180° sur la table de travail (101) autour de l'axe de rotation perpendiculaire à la surface porteuse de la table de travail (101), et le placement du premier ruban adhésif de surface d'extrémité de l'autre cellule de batterie (20) sur la trajectoire de coupe du premier couteau (21), et la commande du premier couteau (21) pour l'incliner vers le bas afin de couper le premier ruban adhésif de surface d'extrémité de l'autre cellule, puis le déplacement de l'autre cellule de batterie (20) le long de la première direction, et le placement du deuxième ruban adhésif de surface d'extrémité de l'autre cellule de batterie (20) sur la trajectoire de coupe du premier couteau (21), et la commande du premier couteau (21) pour l'incliner vers le bas afin de couper le deuxième ruban adhésif de surface d'extrémité de l'autre cellule de batterie (20).
